# EUROPEAN PATENT SPECIFICATION

(11) **EP 3 727 812 B1**
(45) Date of publication and mention of the grant of the patent: **13.09.2023**
(21) Application number: 18833060.9
(22) Date of filing: 21.12.2018
(51) Int. Cl.: B29C 70/38, B29C 70/34, B29C 64/245

(54) **A FIBER TAPE LAYING SYSTEM**
VERLEGESYSTEM FÜR FASERBAND
SYSTÈME DE POSE DE RUBAN DE FIBRES

(30) Priority: 22.12.2017 CH 16142017; 25.09.2018 CH 11652018
(43) Date of publication of application: 28.10.2020
(73) Proprietor: Mubea Carbo Tech GmbH, 5020 Salzburg (AT)
(72) Inventor: WEINZIERL, Martin, 73479 Ellwangen (Jagst) (DE); PUTZHAMMER, Anton, 5023 Salzburg (AT); CREUZNACHER, Alexander, 4728 Hergenrath (BE); WOLF, Jochen, 55469 Simmern (DE); DUBRATZ, Markus, 57482 Wenden (DE)
(74) Representative: Rentsch Partner AG
(86) International application number: PCT/EP2018/086793
(87) International publication number: WO 2019/122431

(56) References cited:
- WO-A1-2009/156157
- DE-A1-102009 053 289
- FR-A1- 2 862 316
- JP-A- 2002 137 241
- JP-A- 2015 063 049
- US-A- 4 531 992

## Description

### FIELD OF THE INVENTION

The present invention relates to a system for automated laying of fiber tapes, as well as a method for producing fiber-reinforced products using such a system. The invention further relates to a fiber tape as well as a method for producing of such a fiber tape. The present invention further relates to a production line for producing products comprising fiber-reinforced plastics.

### BACKGROUND OF THE INVENTION

WO 2008/154269A2 was published on 18 December 2008 on behalf of Magnus Intellectual Property GmbH and discloses a large fiber composite machine having a placement head for applying fiber composite material to an application surface. The machine comprises a cross slide that is supported on a carriage mounted on floor rails that supports a creel. The creel holds a number of spools of fiber composite material such as carbon fiber in a resin matrix. Individual fiber bundles from the spools in the creel are directed by series of rollers along the length of an arm to a wrist assembly that carries the placement head. The wrist assembly is configured to rotate around the three axes to provide sufficient motion to the placement head. The placement head comprises a compaction roll that applies fiber bundles to an application surface. The document discloses that the application surface may be fixed as in the case of an aircraft wing or may be mounted on a rotating headstock/tailstock such in the case of a cylindrical workpiece. The document further discloses individual lanes of fiber composite material that are each driven by a drive roll that carries a clamp mechanism, a feed mechanism and a cutter for the composite material. Due to the dynamic loads occurring at high accelerations, such large types of fiber composite machines can only be operated at relatively moderate speed. As well, reliable conveyance/direction of the fibers along the length of the moving arm strongly depends on the type of movements as well as the type of fibers.

US 2008/0216963 A1 was published on 11 September 2008 on behalf of Hamlyn et al. and discloses an applicator head for applying fibers in order to make components of composite materials. The application discloses using ribbons impregnated with resin, particularly carbon fibers impregnated with thermosetting or thermoplastic resin. The applicator head is intended to be mounted at the end of a displacement system and arranged to be moved along a surface and to apply to a wide strip formed of a number of fibers to the surface.

US 2017/0095985 A1 was published on 6 April 2017 on behalf of Airbus Defence and Space GmbH and discloses an activation device used for binder activation during the production of a fiber-reinforced plastic laminate. The document discloses using semi-finished fiber ribbons that are charged with binder and are delivered onto a laying support. The activation device comprises at least one light-emitting diode that is configured to heat the binder. Thereby the binder is activated and a tackiness of the semi-finished fiber ribbon can thus be produced before they are laid. This prevents the laid semi-finished fiber ribbons from moving.

US 2015/0290883 A1 was published on 15 October 2015 on behalf of Hexcel Reinforcements and discloses a method for continuously applying on a deposition surface of an intermediate material composed of a unidirectional layer of reinforcing fibers that is associated on at least one of its faces to a layer of thermoplastic and/or thermosetting material that forms an intermediate layer. Such types of composites have been proposed in order to reduce fragility and increase impact resistance of products made from unidirectional reinforcing sheets and consolidated by a resin matrix. In order to reduce delamination problems of products made from such materials prior to being laid the intermediate material undergoes special treatment such that the thermoplastic and/or thermosetting material penetrates the layer of reinforcing fibers and creates bonding bridges in the thickness of the reinforcing fibers that extend from one main face to the other.

WO 2014/140145 A1 was published on 18 September 2014 on behalf of Dieffenbacher GmbH Maschinen- und Anlagenbau and discloses a laying system for producing composite components by laying of band material on a mobile table. The laying system shown comprises a basic structure having a bridge that extends over the mobile table. A material supply unit is arranged at one of the two ends of a basic structure and band material is drawn from the material supply by gripper units that move along linear drives extending along the bridge over the mobile table. As soon as band material of a desired length is drawn from the material supply, it is separated from the material supply by means of a cutter. The application further discloses to partially enclose and guide the segment of band material in guide tracks that extend along the bridge. In order to position the segment of band material, the mobile table is positioning and oriented with respect to the basic structure and the segment of band material can be lowered onto the mobile table and be compressed onto layers of band material present on the mobile table by means of a band fixing unit that is arranged at the bridge of the basic structure.

In order to increase the laying rate the application teaches to use two small gripper units for drawing the band material from the material supply compared to a single large gripper unit.

US2015/0306826 A1 was published on 29 October 2015 on behalf of the same applicant as of WO2014/140145 A1 and discloses a layup machine for laying up tracking sections of tape on a part to be produced. The concept for laying sections of tape is essentially identical with the one disclosed in WO2014/140145 A1. However, in order to increase the laying rate, the document proposes to use two essentially independently from each another operable assemblies comprising of material supply units, gripper units, cutters and linear drives extending along bridges over a single mobile table. Thus, lowering/compaction of sections of tape with a first assembly as well as drawing and cutting of a subsequent section of tape with a second assembly can be done simultaneously, thus reducing the unproductive time of the machine.

WO 2009/156157 A1 was published on 30 December 2009 on behalf of ZSK Stickmaschinen GmbH and discloses a device and a method for applying a band-shaped material by way of an application unit. The band-shaped material can be applied onto the surface of a workpiece or carrier material in webs predetermined by a control code, wherein a controller actuates drives for this purpose, which move the application unit and the workpiece or the carrier material relative to each other for applying the material. The device has at least one reservoir for the band-shaped material. The band-shaped material reaching from the reservoir to the application unit. The band-shaped material is capable of being pressurized by the application unit against the surface of the workpiece or the carrier material, or on the surface material that is already applied, wherein the device adheres or welds the band-shaped material onto the surface of the workpiece or carrier material at least in sections.

JP 2015 063049 A was published on 9 April 2015 on behalf of Toho Tenax Co Ltd. and discloses a prepreg automatic lamination apparatus for producing a prepreg laminate of an intended planar shape. A prepreg laminate which has an intended planar shape and an intended lamination configuration is produced by composing prepregs to be laminated with a plurality of tape-like prepregs, conveying the tape-like prepregs separately, cutting the tape-like prepregs independently to mount the tape-like prepregs with intended lengths and rotating freely the mounting surface on which the tape-like prepregs are mounted.

JP 2002 137241 A was published on 14 May 2002 on behalf of Mitsubishi Heavy Ind. Ltd. and discloses an automatic lamination molding apparatus configured to be able to stably guide to a pressing roller in a desired pasting state. The automatic laminate molding device comprises a tape supply guide having a plurality of tape guide grooves formed side by side and an internally formed cooling passage. The device further comprises a mold release film removing means, which removes a mold release film from a tape led in by the guide, a tape supply means which draws out and sends the tape and a gas heater which heats the tape guided to the pressing roller after pressing through the guide. The gas heater has a heating gas blow-off nozzle directed orthogonally to the adhesive surface of the tape.

Similar systems are disclosed in e.g. US 2009/229760 A1 and US 4,591,402.

### SUMMARY OF THE INVENTION

For the production of relatively large components (such as e.g. aircraft wings or railcars) conventional systems having fiber placement heads mounted on robotic arms can be operated at relatively high average speeds because the large dimensions allow to obtain high maximum speeds even by moderate accelerations. Nevertheless these systems are typically restricted to special types of fibers to be placed in order to ensure correct positioning, pre-tensioning and orientation of the laid fibers as well as to avoid damage to the fibers during conveyance from a storage system to the fiber placement head. Nevertheless, as soon as relatively small components (if compared to the examples mentioned above) have to be produced, frequent consecutive change of direction and change of position of the fiber placement head relatively to a substrate make fast processing speeds impossible because the technically complex placement heads are typically heavy which anticipates high accelerations due to power restrictions of the drive, accuracy requirements or structural limitations of the systems.

In addition, conventional system for laying of fiber tapes are typically restricted to certain types of matrices such as fiber tapes pre-impregnated by thermoset polymer matrix material (aka pre-pregs) or fiber tapes comprising thermoplastic polymer matrix material. Whereas systems using fibers with thermosetting matrices typically allow to obtain products having particularly high fiber volume ratios and mechanical competences, major drawbacks of these systems are that they require relatively expensive fiber tapes which have to be stored and processed under special temperature conditions. In addition, in order to allow fast processing speed of these pre-impregnated fiber tapes when conveying of the tapes in a tape laying system special measures have to be taken in order to prevent mechanical damage (e.g. disintegration) of the tapes. As well, the semi-finished products resulting from such types of laying systems typically require relatively expensive post-processing using autoclaves, which makes the whole processes relatively expensive and not suited for large-scale series production.

In order to solve at least one of the aforementioned problems, a production line according to the present invention typically comprises a fiber tape laying system arranged to lay a semi-finished product onto a table. The fiber tape laying system typically comprises a table that has a substrate configured to receive a first fiber tape to be laid. The first fiber tape has a first surface arranged to be adjacent to the substrate when the first fiber tape is laid onto to the substrate, and comprising a binding means arranged at least partially on the first surface and as well as a second surface opposite to the first surface. The fiber tape laying system typically further comprises a fiber laying head that has a first supply of the first fiber tape and a first compaction means adapted to compact the first fiber tape onto the substrate. The fiber tape laying system typically further comprises a first fiber tape feeding means arranged to feed first fiber tape from the first supply to the first compaction means and further comprises a first heating means adapted to heat the binding means directly or indirectly before being compacted onto the substrate and a first separator configured to separate a predefined strip of first fiber tape from the first supply before being compacted onto the substrate. The fiber laying head and the table are configured to be displaced and/or rotated relatively to each other, as will be explained in more detail below.

The fiber tapes will typically be laid such that the fibers are oriented according to a predetermined ply schedule.

In a variation of a production line according to the present invention, a fiber tape laying system may comprise a tape guiding means arranged upstream (with respect to the conveying direction of the fiber tape) from the compaction means and configured to supply a fiber tape in a specified manner. The tape guiding means may be configured to position the fiber tape with respect to the compaction means and/or to orient the fiber tape toward the compaction means and/or to generate a tension in the fiber tape. Good results may be obtained if the tape guiding means comprises a mechanical deflector, such as a roll or a plate as will be shown in more detail below. Alternatively or in addition, the tape guiding means may comprise an airflow that is directed to the fiber tape and thus generates a tensioning of the fiber tape and/or positioning of the fiber tape. A tape guiding means may also comprise a system for temperature regulation in order to improve processing speed of a fiber tape laying system.

In a variation of the invention, the heating means may comprise a radiator for emitting electromagnetic radiation. As such, the heating means may comprise an infrared radiator.

Alternatively or in addition, the heating means may comprise a laser unit configured to heat the binding means directly or indirectly by deposition of thermal energy on the fiber tape. Thus highly localized heating of the binding means becomes possible which may e.g. be advantageous when processing thermosensitive fibers. The laser unit may also be configured to heat the binding means indirectly by deposition of thermal energy on the substrate (respectively one or multiple layers of fiber tape previously laid on the substrate).

Alternatively or in addition, the heating means may comprise a hot gas unit, such as a hot gas blower that directs hot gas to the binding means and/or the substrate and/or one or multiple layers of fiber tape previously laid on the substrate. Hot gas may e.g. be air or another gas mix. In particular, it may comprise protective gas or be a protective gas, such as an inert gas. Thus, degradation of the binding means and/or of potentially temperature-sensitive fibers and/or binding means may be at least reduced.

Alternatively or in addition, the heating means may comprise an electrical heating system configured to effect joule heating (resistive heating) in at least certain fibers of the fiber tape and/or in the binding means in order to heat the binding means directly or indirectly. By such direct heating of the fiber tape (respectively the binding means) only few installation space in the region of the compaction means is required for the heating means. Thus, on the one hand more installation space e.g. for positioning means for the fiber tape becomes available. On the other hand heating becomes much localized (e.g. if compared with infrared radiators) and thus negative impacts of heating on other components of the production line can be reduced. Such negative impacts include material fatigue, pollution and problems when separating/cutting of fiber tape comprising binding means. Such an electrical heating system may be applied to first fiber tape is to be laid/compacted and/or to one or multiple layers of fiber tape previously laid on the substrate.

In a first variation of an electrical heating system, the electrical heating system comprises an inductive heating arrangement configured to induce eddy current in the fibers and/or in the binding means. Such a variation may be particularly advantageous if at least certain fibers of the fiber tape are arranged as a fabric. Alternatively or in addition, the fiber tape may comprise single fibers or bundles of fibers configured and arranged in order to increase joule heating by eddy currents, such as fibers made from a particular material or having a particular coating or geometry. Such inductive heating may be applied to first fiber tape is to be laid/compacted and/or to one or multiple layers of fiber tape previously laid on the substrate.

In a second variation of such an electrical heating system, the electrical heating system comprises a first electrical contact means and a second electrical contact means, the first and the second electrical contact means arranged to establish an electrical connection with the fiber tape and apply a voltage to generate a current in at least some of the fibers of the fiber tape and/or the binding means, resulting in joule heating and consequently heating of the binding means. Such an electrical heating system may be applied to first fiber tape is to be laid/compacted and/or to one or multiple layers of fiber tape previously laid on the substrate.

In a variation of the invention, the first and the second electrical contact means are sliding contacts as will be shown in more detail below.

In a variation of the invention, the first and the second electrical contact means are arranged on a roll. Good results may be obtained if the first and the second electrical contact means are arranged on the same roll. However, for some applications the first and the second electrical contact may also be arranged on two or more separate rolls. In a variation of the invention, the first and the second electrical contact may also be arranged on two separate rolls whereof at least one roll is part of a tape guiding means. In a variation of the invention, the first electrical contact is arranged at the substrate, whereas the second contact is arranged at the compaction means of the production line, preferably at a compaction roll.

Particularly fast and efficient heating of a binding means may be obtained if, the first and the second electrical contact means are arranged at the circumferential (curved) surface of a roll, separated by at least one electrically non-conductive surface area. In a first variation, the first and the second electrical contact means are spaced apart from each other essentially in direction parallel to the rotational axis of the roll, while the first and/or the second electrical contact means at least partially extend in circumferential direction of the roll, being separated by at least one electrically non-conductive surface area. Good results may be obtained if the first and the second electrical contact means are arranged adjacent to the circular faces of the roll, as will be explained in more detail below. Particularly good results may be obtained if the roll is a compaction roll.

Alternatively or in addition, the first and the second electrical contact means may be arranged at the circumferential (curved) surface of a roll, extending essentially in direction parallel to the rotational axis and spaced apart from each other in circumferential direction of the roll, while being separated by at least one electrically non-conductive surface area. Particularly good results may be obtained if the roll is a compaction roll.

In order to obtain highly controlled heating of the binding means, the roll may comprise a multiplicity of first and second electrical contacts distributed around the circumference of the roll. Thus, differing voltage may be applied at different sections of the circumferential (curved) surface of the roll.

In a variation of the invention, the voltage applied between the first and the second electrical contact may be constant over time. Alternatively, the voltage applied may change over time. In a variation of the invention having a first and a second electrical contact means arranged on a roll, the voltage applied may depend on the angularity of the electrical contact means, respectively the rotational position of the roll as will be explained in more detail below.

First and/or the second electrical contact means may be part of a tape guiding means.

In a variation of a production line according to the invention, which allows to obtain particularly high processing speeds, the first heating means is configured to heat the binding means of the first fiber tape to be laid onto the substrate and is also configured to heat at least a portion of the substrate and/or the binding means of at least a portion of a first fiber tape already arranged on the substrate and onto which the first fiber tape is to be laid/compacted (respectively one or multiple layers of fiber tape previously laid on the substrate). Such an arrangement may also be used for second, third and more heating means, respectively fiber tapes, if multiple of these are used - as described herein. Thus, it becomes possible to heat binding means of fiber tape already arranged on the substrate during a longer period - respectively on a longer heating zone - and thus more efficiently as well as in a way that is more gentle to the fibers if compared to heating of the fiber tape to be laid which is typically processed with high speed in the laying head where space is limited and so typically are also heating zones - making high heating power necessary. This, in particular holds true in a variation where the heating means is arranged such that it radiates heat within a certain area in the direction of motion of the laying head relative to the substrate. Particularly good results may be obtained if the heating means comprises an elongated infrared radiator that its elongated dimension is in parallel to the direction of motion of the laying head.

In a variation of a production line according to the invention, the first heating means is configured to heat a portion of the substrate and/or the binding means of at least a portion of a first fiber tape already arranged on the substrate and onto which the first fiber tape is to be laid/compacted (respectively one or multiple layers of fiber tape previously laid on the substrate), without direct heating of fiber tape to be newly laid/compacted on the substrate (respectively one or multiple layers of fiber tape previously laid on the substrate).

In a variation of the invention, the heating means is arranged such that fibers tapes arranged as single or multiple layers of tapes on the substrate are heated by the heating means such that their interconnection by means of the binding means can be significantly improved by subsequent compaction by the compaction means. Such compaction may be performed with or without laying of an additional layer of fiber tape.

Good results may be obtained if the heating means is arranged relative to the compacting means in the direction of motion of the laying head relative to the substrate. Thus, portions of the substrate (respectively fiber tape already arranged on the substrate) can be heated particularly efficiently.

Good results may be obtained if between about 50% and 99% of the thermal energy delivered by the first heating means is delivered to the substrate and/or to the first fiber tape already arranged on the substrate, and if the residual thermal energy is delivered to the first fiber tape to be laid on the substrate. Particularly good results may be obtained if about 80% of the thermal energy delivered by the first heating means is delivered to the substrate and/or to the first fiber tape already arranged on the substrate, and if the residual thermal energy is delivered to the first fiber tape to be laid on the substrate. It is clear that the given values should be understood to refer to the effective thermal energy delivered to the substrate and/or fiber tape, respectively that some thermal energy effected by the heating means will be delivered to the surroundings, including air and machine parts.

For some applications essentially all effective thermal energy delivered by the first heating means is delivered to the substrate and/or to the first fiber tape already arranged on the substrate.

In order to obtain such a delivery of thermal energy to a first tape to be laid and a substrate respectively tape already present on the substrate, the heating means may comprise multiple heating sources. However, the heating means may also comprise only one heating source, such as an infrared radiator that radiates a first portion of energy (e.g. respectively infrared radiation) in a first direction to the first fiber tape to be laid and a second portion of energy (e.g. respectively infrared radiation) in a second direction to the substrate onto which the first tape has to be laid, respectively to a first tape already arranged on the substrate. The amount of energy emitted by the heating means may be variable in time, as may be the ratio between the first and the second portion of energy, as well as the first and the second direction. Alternatively or in addition, the heating means may comprise a baffle or screen to control delivery of energy and/or may be tiltable to control delivery of energy.

Various types of heating sources may be used, as e.g. described herein for being used as heater means. If a heating means comprises multiple heating sources, the heating sources may be from the same type or may be different types.

In order to increase processing speed as well as to prevent damage of the fibers of the fiber tape and/or the binding means, a production line may comprise at least one temperature sensor in order to control heating of the binding means. Good results may be obtained if the temperature sensor comprises a non-contact temperature sensor, such as an infrared thermometer. The temperature data collected by one or by multiple temperature sensors may be used to control the heating means and/or the processing speed of the production line (respectively the conveying speed of the fiber tape) and/or to regulate temperature of a compaction means.

Particularly good results may be obtained if unidirectional tapes are used, which may be obtained by rovings that are flattened, as will be explained in more detail below.

Such a production line may be used for the production of dry semi-finished products suitable to be processed to consolidated products made from fiber-reinforced plastics e.g. using resin transfer methods (RTM) as will be explained in more detail below. Semi-finished products produced by a system according to the invention will typically have an inherent stability that prevents the contained layers - respectively strips of fiber tape - from critical movements relatively to each other when being inserted to a production tool or during consolidation by resin.

According to the invention, the substrate does not have to be flat but may also have a curvature or contours. The substrate may be at least part of the surface of the table. Alternatively or in addition at least part of the substrate may be a tool that may be removed from the table together with the semi-finished product after lay-up or may stay with the table when the semi-finished product is removed from the fiber tape laying system. The substrate may also be at least one layer of fiber or fiber tape laid in an antecedent process step. Such a process step may be performed by the production line according the present invention, or may be done separately.

A production line with particularly high processing speed and precision can be obtained if the table is a motion table configured to be displaced and/or rotated with respect to the base of the fiber tape laying system.

Particularly high processing speed may be obtained if the fiber laying head is essentially stationary with respect to the base of the fiber tape laying system. Thus, compared to systems with a stationary table processing speed becomes essentially independent of the total weight of the fiber laying head as acceleration to the fiber laying head can be neglected. Nevertheless, according to a variation of the present invention, at least a part of the fiber laying head may also temporarily be displaced and/or rotated (e.g. tilted) with respect to the base of the fiber tape laying system. For example, the compaction means may be displaceable to approach the substrate for setting up of the fiber tape laying system and subsequently be displaced to be removed from the substrate for removal of the laid fibrous component.

In order to reduce weight of the motion table and hence reduce dynamic loads, the motion table may be at least partially made from an aluminum and/or a composite material (e.g. panels at least partially made from a carbon fiber-reinforced plastic as well as sandwich structures).

In a variation of the invention, the the production line comprises more than one table having a substrate. Hence such a variation may be advantageous when being used for a production line as described below as it will allow removal of one or multiple semi-finished products by a pick-up means from the substrate of a first table while at least one additional semi-finished product is laid on the substrate of a second table. Alternatively or in addition, also a backing film may be

For some variations of first fiber tapes the substrate may comprise a backing film configured to receive a first layer of fiber tape. Thus, after one or multiple semi-finished products have been laid, the backing film may be removed from the table and the semi-finished product(s) may be removed from the backing film while the production line continues production of semi-finished products. Such a variation may be used for a method as described below, respectively for a production line as described below. Good results may be obtained if the backing film comprises an adhesive surface comprising an adhesive coating configured to at least temporarily bond the first fiber tape to the backing film (respectively to the table). Hence, the substrate may also comprise a single- and/or a double-sided adhesive film that supports adhesion of a first layer of first fiber tape to the table. Alternatively or in addition, the substrate may also comprise a backing fabric. Good results may be obtained if the backing fabric made from glass fibers. Alternatively or in addition the substrate may also comprise a non-permanent adhesive coating (e.g. a spray adhesive) arranged on the surface of the table. Instead of a backing film, also a (relatively rigid) backing plate may be used.

The table may also be a suction table configured to temporarily hold a layer of fibers arranged on the substrate by means of a pressure gradient.

A production line suited for a wide range of fiber tapes may be obtained if the first compaction means comprises a first compaction roller.

Good results may be obtained if the first separator comprises a first blade configured to cut the first fiber tape with an essentially straight cutting edge. Alternatively or in addition, the separator may also comprise a laser cutter and/or a plasma cutter. Other types of cutters may be applied.

In order to reduce waste and/or to reduce expenses for post-processing the first separator may comprise a first angular actuator that is arranged to rotate the first cutting edge relatively to any of a plurality of rotational positions. Thus, the boundary region of semi-finished products may be smoothed (compared to a stepped geometry that may occur with unvarying rotational positions.

In order to increase processing the first compaction means may comprise a system for temperature regulation. Such a system may allow active temperature regulation (active heating and/or cooling). In order to obtain good results, the first compaction means will be kept at temperature that is below the activation temperature of a binding means, such as the melting temperature of a thermoplastic in case the binding means comprises a thermoplastic.

In order to increase processing speed the fiber laying head may further comprise a second supply of a second fiber tape and a second compaction means adapted to compact the second fiber tape onto the substrate. In such an embodiment of the invention a second fiber tape feeding means will typically be arranged to feed second fiber tape from the second supply to the second compaction means, as well as a second heating means adapted to heat the second fiber tape directly or indirectly before being compacted onto the substrate. Furthermore, in such an embodiment of the invention a second separator may be configured to separate a strip of the second fiber tape from the second supply before being compacted onto the substrate.

In an analogous way, a production line may also comprise third, fourth and more components of above-mentioned components. The second supply, second compaction means, second fiber tape feeding means, second heating means and second separator may be essentially identically formed as the corresponding first components as described herein. Alternatively or in addition, at least some of them may be formed differently.

In a variation of the present invention, the first fiber tape may have a first width and the second fiber tape may have a second width the first width being equal to the second width. Hence, multiple tapes of the same type may be laid onto the substrate in parallel, allowing to decrease cycle times.

In another variation of the present invention, the first fiber tape may have a first width and the second fiber tape may have a second width, the first width being larger than the second width. Thus, using of the first fiber tape coverage of large areas with fewer strips of fiber tape becomes possible while using of the second fiber tape allows a more precise approximation of the desired final product shape and thus to decrease waste (cutting scrap).

For some applications, when being laid onto the substrate the first fiber tape may be compacted at a first distance apart from the second fiber tape. Good results may be obtained, if the first distance is essentially equal to the first width and/or essentially equal to the second width.

For some applications, when the table is moved in a first direction relatively to the fiber laying head during compaction, the first compaction means is arranged with respect to the first direction at the same position as the second compaction means.

In a variation of the invention, when the table is moved in a first direction relatively to the fiber laying head during compaction, the first compaction means is arranged with respect to the first direction at a second distance apart from the second compaction means. Thus fiber laying heads with a more complex design may become possible which allows improving overall-performance of the production line.

Using fiber tapes with a low width allows to minimize the amount of waste caused by trimming of the boundary regions of a semi-finished product, however also has an adverse effect in term of processing speed. Hence, increasing processing speed and decreasing waste are conflicting principles and require trade-offs. In order to obtain high processing speed and low amount of waste, according to a variation of the invention the first fiber tape and/or the second fiber tape (if present) may have a width of between 10 mm (millimeters) and 30 mm. It turned out using a first and/or second fiber tape (if present) which has/have a width of between 5 mm and 15 mm allow production with sufficiently low amount of waste at sufficiently high speeds for a large variety of products. A particularly good tradeoff between efficiency of tape laying and amount of waste for a variety of applications may be obtained if the first fiber tape and/or the second fiber tape (if present) (and/or any potential additional fiber tape) has a width of between 9 mm and 12 mm may be optimal. If additional fiber tapes are present, these fiber tapes may have a width in the same range. However, additional tapes may also have a width below this range in order to improve approximation of the desired product shape and thus reduce waste (as described below) and/or e.g. to induce certain types of local mechanical reinforcements. Alternatively or in additional tapes may also have a width above this range in order to increase performance when large areas have to be covered with fibers.

For special types of products, a first and/or a second fiber tape may have a width that has about the width (a dimension) of the final product. Such a variation of the present invention may e.g. be used to produce a leaf spring. Hence, with such a variation of the invention e.g. a band-link semi-finished product comprising multiple layers of fiber tape, each layer consisting of one layer of fiber tape may easily be produced. The layers may be identical layers originating from the same fiber tape. However, at least some of the layers may be made from a different fiber tape, such as a fiber tape comprising a different type of fibers and/or having a different thickness and/or having a different fiber orientation. For the production of certain types of products, good results may be obtained if the fiber tape comprises a stack of multiple layers of fibers, as will be explained in more detail below.

In a variation of the invention, the first compaction means and the second compaction means may be integrally formed, as will be explained in more detail below.

In order to improve the mechanical competence of a semi-finished product a production line according to the present invention may comprise an applicator assembly arranged to apply a stabilization agent to the second surface of the first fiber tape. Such a stabilization agent may comprise a binder and/or a tackifier such as a powder (sprayed) and/or a textile, such as an adhesive web (e.g. Spunfab^{®}, Bafatex^{®}). A stabilization agent may also assist subsequent resin infusion of a semi-finished product produced by the production line. Good results may be obtained if the applicator assembly is arranged such that the stabilization agent is applied to the second surface of the first fiber tape after the first fiber tape has been compacted onto the substrate.

According to a variation of the invention binding means may also be applied to the first surface inside the fiber laying head.

According to a further aspect of the invention, a fiber laying head as described herein is specified.

According to a further aspect of the invention, a fiber-reinforced product comprising at least one layer made from a fiber tape as described herein, wherein the fibers of the fiber tape are embedded in a matrix material is specified. In a variation of the invention the matrix material is a thermosetting matrix material. Such a fiber-reinforced product may be obtained by producing a semi-finished product using a production line and subsequently bonding of the fibers of the semi-finished product e.g. by a RTM process.

The present invention is further directed to providing a method for producing a product made from fiber-reinforced plastic. Such a method comprises the method step of providing a production line as described herein. In a further step at least one layer of the first fiber tape is laid onto the substrate thereby forming a semi-finished product. In a further step according to the invention the semi-finished product is removed from the table. In a further step according to the present invention the semi-finished product is inserted to a production tool. In a variation of the invention in a further method step the fibers of the at least one layer of first fiber tape of the semi-finished product may be bonded by a resin in the production tool.

The present invention is further directed to providing a method for a highly efficient production allowing also large-scale series production may become possible. In such a method, a production line as described herein is provided and at least one layer of a fiber tape is laid onto the substrate, thereby forming a first semi-finished product. Such a first semi-finished product will typically be essentially flat (two-dimensional), meaning that its extension over the substrate of the table will be much larger than its thickness. In a further step, the first semi-finished product is removed from the table. This may be done using a suction pick-up means, as will be described in more details below. In a further step, the first semi-finished product is conveyed to a first tool and in a further step the first semi-finished product is draped to align with a first tool surface of the first tool to form a pre-shaped semi-finished product. By draping, the essentially two-dimensional shape of the semi-finished product will typically be converted into a three-dimensional shape that essentially conforms to the three-dimensional shape of a final product. In a variation of the present invention, also multiple semi-finished products may be draped subsequently or in parallel to align with the tool surface. Thus, a method may further comprises the method steps of laying at least one layer of a fiber tape onto the substrate thereby forming a second semi-finished product, removing of the second semi-finished product from the table, conveying of the second semi-finished product to the first tool and draping of the second semi-finished product to align with first the tool surface of the first tool forming a pre-shaped semi-finished product together with the first semi-finished product. Within this context also additional semi-finished products may be produced by the tape laying system and be picked and placed to align with the tool surface.

Good results may be obtained if the substrate is temporarily removed from the direct operating area of the fiber laying head before removal of at least one semi-finished product laid by the head. Thus, subsequent semi-finished products may be produced by the fiber laying head while the semi-finished produced before are removed from the substrate. Easy removal of the substrate becomes possible using a variation of a production line having multiple tables and/or using backing films and/or backing plates as described herein.

The process of draping may be assisted by inducing hot gas (e.g. air) into the semi-finished product (respectively pre-shaped semi-finished product).

In order to consolidate the resulting pre-shaped semi-finished product the fibers of the pre-shaped semi-finished product may be bonded by a resin in the first tool.

For some types of fibers or products with specific geometries, according to the present invention the method further comprises the method steps of removing of the pre-shaped semi-finished product from the first tool, conveying of the pre-shaped semi-finished product to a second tool and draping of the pre-shaped semi-finished product to align with a second tool surface of the second tool. In a further method step the fibers of the pre-shaped semi-finished product are bonded by a resin in the second tool. The first tool surface may have a different geometry as the second tool surface, which will assist in gradual shaping of the semi-finished product, allowing to obtain much more precise draping results. As well, such a variation is advantageous as it allows to reduce damage induced to the surface of a production tool during draping. Such damage may be scratching of the high-grade surface necessary to obtain final products having highquality surfaces by resin transfer molding processes. As well, it will allow to reduce the time necessary for draping and verification of draping in the production tool to a minimum, making it possible to operate a production tool constantly at higher temperatures and thus reduce cycle times for production.

A highly economic production can be obtained if the fibers of the pre-shaped semi-finished product are bonded by a transfer molding process. Depending on the application, transfer molding process may e.g. be a resin transfer molding process or a vacuum assisted resin transfer molding process.

In order to assist in draping, draping may be done using a suction pick-up head comprising a foam gripper.

In a variation of the invention, the first semi-product and/or the second semi-product and/or additional semi-products and/or any pre-shaped semi-product may be conveyed by an automated systems, such as a robot (as will be shown in more detail below). In particular thanks to the tape laying system as described herein, by this production can be automated to a large extent and hence productivity be increased. This is possible due to several reasons. As such, a production line as described herein allows very fast production of semi-finished products that may have a highly complex and at the same time accurate pre-defined orientation and positioning of fibers. Thus, if desired a relatively high number of semi-finished products may be laid on a table (at well knownpositions) which by a pick-and-place process can be laid onto the surface of a tool, making it possible to obtain products having also highly complex three-dimensional shapes.

In a variation of the present invention, the method further comprises the method step of cutting of the laid semi-finished product to obtain a pre-defined shape (e.g. outer contour), prior to draping of it to align with the first tool surface of the first tool. Thus, on the one hand the amount of cutting/shaping of a final product during post-processing can be decreased. On the other hand semi-finished products having a precise predefined outer contour can be obtained which is highly advantageous if e.g. multiple semi-finished products have to be aligned with a first tool surface at the same time (e.g. adjacent to each other) such as in order to obtain products that have relatively complex or three-dimensionally highly curved shapes. Such cutting may take place while the semi-finished products are still on the table. Alternatively or in addition, at least some of the cutting may take place after removal from the table. Good results may e.g. be obtained by using a knife or a laser cutter.

If a second tool is used, alternatively or in addition the method may also comprise the method step of cutting of the laid pre-shaped semi-finished product to obtain a predefined shape prior draping it to align with the second tool surface of the second tool.

Good results may be obtained the fibers of the at least one layer of first fiber tape (as well as fibers of other fiber tapes if present) are bonded by a transfer molding process. Depending on the application, the transfer molding process may be a resin transfer molding (RTM) process or a vacuum assisted resin transfer/infusion (VARI) molding process.

According to a further aspect of the invention a fiber tape for being used with a production line (respectively process) as described herein is specified. Such a fiber tape typically comprises at least one layer of reinforcing fibers, the layer having a first surface and a second surface, the second surface opposite to the first surface. According to a variation of the invention, the fiber tape may further comprises a binding means that is at least partially arranged on the first surface. The binding means is configured to be brought to into an adhesive state by heat activation.

Typically, the layer of reinforcing fibers comprises dry fibers, hence at least some fibers are neither impregnated by e.g. a thermosetting resin (such as epoxy) or a thermoplastic matrix.

The layer of reinforcing fibers may comprise unidirectional fibers (respectively bundles of unidirectional fibers) that may be arranged in longitudinal direction of the fiber tape. However depending on the application also other orientations of fibers may be used, including transversal arrangement of fibers. Alternatively or in addition, the layer of fibers may comprise a woven, knitted or braided fabric. The invention is not limited to these types of fabrics.

Particularly good results may be obtained if the binding means comprises a thermoplastic or is a thermoplastic. In such a variation of the invention, a reliable fixation of layers of fiber tape relatively to each other can be obtained while obtaining semi-finished products than can easily be infused with matrix in a subsequent process, such as e.g. by resin transfer molding.

For certain types of layers of reinforcing fibers the binding means may comprise a thermoplastic yarn. Such a thermoplastic yarn may be arranged on the first surface of the layer of reinforcing fibers as e.g. by a sputtering process (respectively by a spraying process). Alternatively or in addition, a thermoplastic yarn may be partially looped into the layer of reinforcing fibers.

Products with a particularly high mechanical competence may be obtained if the layer of reinforcing fibers comprises a unidirectional fabric tape having a thermoplastic weft yarn. A thermoplastic weft yarn may be at least part of the binding means. Alternatively or in addition, a unidirectional fabric tape may also comprise weft yarns made from carbon, glass, aramid or other types of yarns (respectively fibers).

In order to improve positioning of a fiber tape laid on the substrate, the binding means may protrude from the fiber tape in transversal direction on one or on both sides. Thus, some type of cross-linking between adjacent strips of fiber tape in transversal direction can be obtained if desired. When using fabric tape with thermoplastic weft yarn, the weft yarn may protrude from the fabric tape in transversal direction of the fabric tape.

Alternatively or in addition, the layer of reinforcing fibers may comprise a unidirectional fabric tape comprising at least one thermoplastic longitudinal yarn arranged in the longitudinal direction of the fiber tape. The thermoplastic longitudinal yarn may be at least part of the binding means.

Good results may be obtained if the binding means amounts to between 0.1% and 10% of the total volume of the layer of reinforcing fibers. For certain types of fibers particularly good results may be obtained if the binding means amounts to between 0.5% and 5% of the total volume of the layer of reinforcing fibers. Thus, sufficient stability of a dry semi-finished product can be obtained while impregnation of the semi-finished product by a resin/matrix is not negatively influenced by the presence of the binding means.

Good results may be obtained if the at least one layer of reinforcing fibers comprises dry fibers. Thus, a semi-finished product can be produced using a fiber type laying system as disclosed herein (respectively a method using such a system) and be processed to a fiber-reinforced plastic product e.g. by a resin transfer method (RTM) as described above. Particularly good results may be obtained if the at least one layer of reinforcing fibers comprises dry fibers only. However, e.g. thermoplastic weft yarns that loop into the fibers may be present in such a fiber tape.

Depending on the application, the at least one layer of fibers may comprise fibers selected from the group consisting of glass fibers, carbon fibers, polymeric fibers as aramid fibers, stone fibers as basalt fiber. Other types of fibers are possible.

According to a variation of the present invention, the fiber tape comprises a stack of at least two layers of fibers. Such a variation of the invention may e.g. be used in order to produce semi-finished products made from particularly high numbers of stacked layers efficiently, such as when producing a leaf spring as described above. In a fiber tape comprising a stack of multiple layers of fibers, the layers of fibers may be identical but may also comprise different types of fibers materials and/or have a different thickness and/or having a different fiber orientation. In such fiber tapes, the layers of fibers may be mechanically interconnected by e.g. a binding means (such as an adhesive agent) and/or by stitching. In a variation of the invention, the stacked layers of fibers are at least partially mechanically interconnected before being compacted onto the substrate. Within this context, "partially mechanically interconnected" is understood such that two adjacent layers of fibers of a stack are interconnected such that a limited degree of shifting motion is still possible between the two layers and/or that mechanical interconnections are only established between certain layers of a stack whereas other (adjacent) layers are not interconnected (or only interconnected to a limited extent) prior to be laid onto the substrate. Such variations of the invention may be advantageous e.g. to process fiber tapes comprising a high number of stacked layers. In a variation of the invention comprising a fiber tape having a stack of at least two layers of fibers, a mechanical interconnection between at least two layers of the stack of layers is established (or increased) during laying onto the substrate. For example a thermoplastic binding means arranged between two adjacent layers (but not yet interconnected with both of these layers) may be heated during the laying process in order to mechanically interconnect the two layers.

According to one variation of the invention, a fiber tape comprising multiple layers is provided to the production line e.g. by unwinding from a reel. Hence, a fiber tape comprising multiple layers may be produced in an antecedent process. Alternatively or in addition, at least one fiber tape comprising a stack made from multiple layers of fibers may be assembled/produced by the production line from multiple layers of fibers before being laid onto the substrate.

A particularly high processing speed may be obtained using a variation of the invention in which the fiber tape is unwound from an actively driven reel. Thus, fast and/or discrete unwinding of fiber tape may be improved. As well as mechanical damage to the fiber tape may be prevented. In other words, fiber tape may be provided to the fiber tape feeding means by unwinding the fiber tape from a passively or an actively driven reel. Particularly good results may be obtained if an actively driven reel is used, such as a reel driven by a motor (e.g. an electric motor) and is used alternatively or in addition to a buffer storage as described herein.

In a variation of the invention, the fiber tape may be wound spiral-like in successive layers on the reel - essentially the way a film is wound on a traditional motion picture reel. In such a case, the reel will typically have a width that is essentially identical with the width of the fiber tape. Such a type of winding, respectively reel, may be advantageous for relatively sensitive types of fiber tapes. In addition, multiple fiber tapes may be wound in this style parallel to each other on the same reel, without crossing each other.

Alternatively the fiber tape may be also be wound around a reel that is significantly wider than the width of the fiber tape (e.g. twice the width, preferable more than three times the width). In this case, several windings following a reciprocating motion along the axis of rotation will be needed to create a layer on the reel, essentially similar to the way yarn is typically wound on a reel. Using such a variation may be advantageous for certain types of fiber tapes as it allows storing more fiber tape on a reel having a given maximum diameter. Hence, for certain applications where e.g. only limited installation space is available, such a variation of a production line may be advantageous. As well, such a variation of a production line may be used in order to increase processing speed as for a given amount of fiber tape the moment of inertia of a reel with such a reciprocating winding will typically be lower than the moment of inertia of a reel with a spiral-like winding as described above. Thus, torque needed to effect the high angular accelerations needed for efficient discrete unwinding can be minimized.

In a production line that has multiple supplies of fiber tape, only one type of reel winding as described herein or both types of reel winding may be used at the same time. Alternatively or in addition also other types of reel windings may be applied.

According to a further aspect of the invention, a method for producing a tape as described herein is specified. The method may comprises the method step of providing at least one layer of reinforcing fibers that has a first surface and a second surface, the second surface opposite to the first surface. In a further method step the layer of fibers may be conveyed at a constant speed though a sputtering assembly. In a further method step, binding means may be sputtered on the first surface. For some applications, binding agent may also be sputtered on the second surface.

According to a variation of a method for producing a fiber tape in an antecedent method step the at least one layer of reinforcing fibers is produced by deformation of a roving. Such a roving may be made flat and then be laid onto the substrate as a tape/band. Good results may be obtained if the roving is at least a 50k roving (has at least 50'000 filaments).

Alternatively or in addition, binding means may also be applied to the first surface of a fiber tape while the fiber tape is conveyed from the supply to the compaction means. Hence, a production line may comprise an applicator for binding means.

According to a further aspect of the invention, a reel that comprises at least one fiber tape as described herein is also specified.

The present invention is also directed to providing a production line that comprises a fiber tape laying system as described herein and arranged to lay a (first and/or a second) semi-finished product onto a table. A production line will typically also a first pick-up means configured to pick-up the semi-finished product from the table and temporarily hold it and further comprise a first conveying means configured to convey the semi-finished product held by the first pick-up means to a first tool. Good results are obtained if the first pick-up means is configured to drape the semi-finished product to a first tool surface of the first tool.

According to the present invention, the production line further comprises a second pick-up means configured to pick-up the semi-finished product from the first tool and further comprises a second conveying means configured to convey the semi-finished product held by the second first pick-up means to a second tool and the second pick-up means configured to drape the semi-finished product to a second tool surface of the second tool.

The second conveying means may be identical with the first conveying means. However, they may also be different conveying means.

For some applications, the second pick-up means may be identical with the first pick-up means. However, in particular if semi-finished products have to be draped into relatively complex geometries, the second pick-up means may be different than the first pick-up means, taking into account the shape of the pre-shaped semi-finished product and thus assisting in gradual shaping of the product.

Good results may be obtained if the first and/or the second pick-up means comprise(s) a foam gripper. Thus, draping of the semi-finished product can be assisted by pressing the semi-finished product onto a tool surface by means of the foam. Highly economic production of large-scale series may be obtained if the first or the second tool (if present) is a production tool (mold) of a resin transfer molding system.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings, which should not be considered limiting to the invention described in the appended claims.
- Fig. 1: schematically shows a variation of fiber tape laying system in a front view;
- Fig. 2: schematically shows the fiber tape laying system of Fig. 1 in a perspective view from above;
- Fig. 3: schematically shows another variation of a fiber tape laying system in a perspective view from above;
- Fig. 4: shows detail D of Fig. 3;
- Fig. 5: schematically depicts a variation of a first and second compaction means;
- Fig. 6: schematically depicts another variation of a first and second compaction means;
- Fig. 7: schematically depicts a further variation of a first and second compaction means;
- Fig. 8: schematically depicts another variation of a first and second compaction means;
- Fig. 9: schematically illustrates a variation of a method for producing a fiber tape;
- Fig. 10: schematically shows a first variation of a fiber tape;
- Fig. 11: schematically shows a second variation of a fiber tape;
- Fig. 12: schematically shows a first variation of a production line;
- Fig. 13: schematically shows a second variation of a production line;
- Fig. 14a: schematically shows a first variation of a heating means according to the present invention;
- Fig. 14b: schematically shows a second variation of a heating means according to the present invention;
- Fig. 15a: schematically shows a third variation of a heating means according to the present invention;
- Fig. 15b: schematically shows a fourth variation of a heating means according to the present invention.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

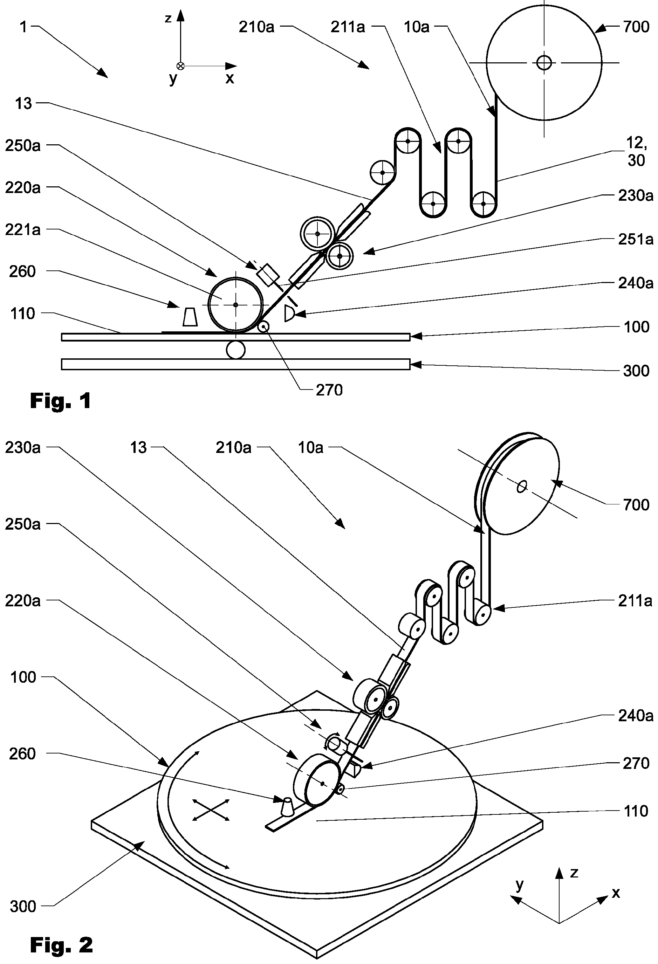

**Figures 1** and **2** schematically show a first variation of a fiber tape laying system 1 that has a table 100 which can be displaced and rotated relatively to the base 300 of the fiber tape laying system 1. The table 100 comprises a substrate 110 to receive a first fiber tape 10a to be laid. The fiber tape laying system 1 further comprises a fiber laying head 200 that is essentially stationary with respect the base 300. Nevertheless, in the variation shown at least parts of the fiber laying head 200 may be displaced towards the table 100 or away from the table 100, e.g. in order for setting up of the fiber tape laying system or for removal of semi-finished or finished products. However, during operation of the variation of a fiber tape laying system 1 shown position and orientation of fiber tapes to be laid will be effected essentially by displacement and rotation of the table 100. Due to this, the fiber laying head 200 can be optimized for precision and performance whereas total weight can be neglected as during production/operation acceleration of the fiber laying head 100 can be neglected. The variation of the fiber laying head 100 shown further comprises a first supply 210a of a first fiber tape 10a that is stored on a reel 700. The first supply 210a comprises a buffer storage 211a for the first fiber tape 10a. The first fiber tape 10a has a first surface 12 that is arranged to be adjacent to the substrate 110 when the first fiber tape 10a is laid onto the substrate 110. As well, the first fiber tape 10a comprises a second surface 13 that is arranged opposite to the first surface 12.

The variation of a fiber tape laying system 1 shown in **Fig. 1** and **2** further comprises a first compaction means 220a that is adopted to compact the first fiber tape 10a onto the substrate 110. The first compaction means 220a comprises a compaction roller 221a. The substrate 110 onto which the fiber tape 10a is compacted and thereby laid may be an upper surface of the table, but may also be an upper surface of foil or fabric arranged on the table 110. However, the substrate 110 may also be an upper surface of a layer of fiber tape laid on the table 100 in an antecedent step. As well, the variation of a fiber tape laying system shown comprises a fiber tape feeding means 230a that is arranged to feed the first fiber tape 10a from the first supply 210a to the first compaction means 220a. Between the first fiber tape feeding means 230a and the first compaction means 220a a first heating means 240a is arranged and adapted to heat a binding means (not shown) arranged on the first surface 12 of the first fiber tape 10a, such that the fiber tape 10a can be bound to the substrate 110 when being compacted onto the substrate 100 by the compaction means 220a. In the variation shown, the binding means is a thermoplastic. In order to accelerate hardening of the binding means while being compacted, the variation of a compaction means 220a as shown comprises a system for temperature regulation which cools the outer surface of the compaction roller 221a below the activation temperature (respectively the melting temperature) of the binding means.

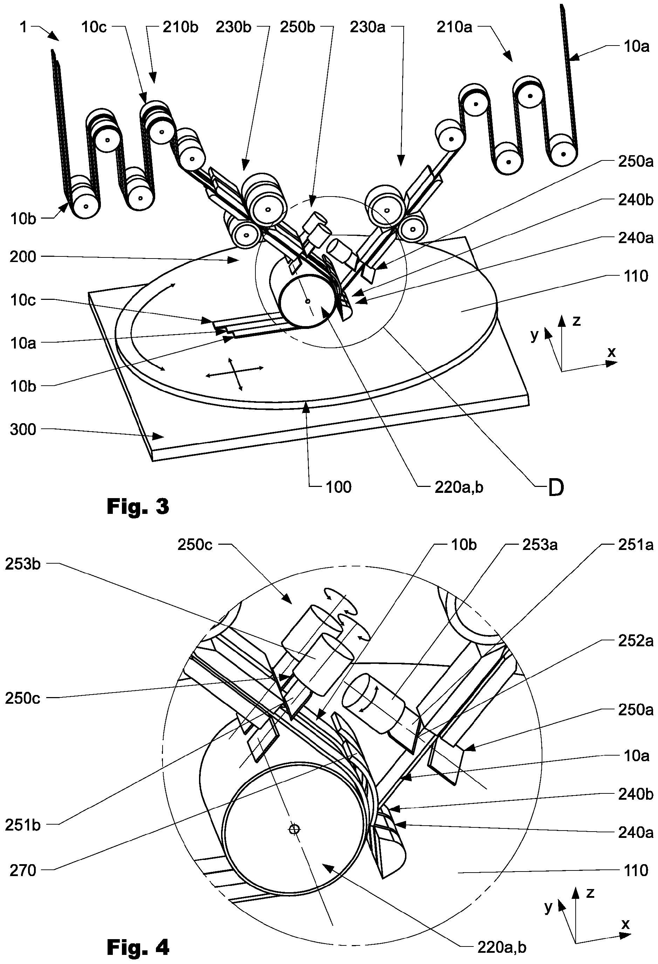

The fiber tape laying system shown 1 also comprises a first separator 250a that is configured to separate a predefined strip of first fiber tape 10a from the first supply 210a before being compacted onto the substrate 110. As indicated by the double-headed arrow and subsequently will be explained in more detail with respect to **Figs. 3** and **4** the first separator 250 comprises a first blade 251a that can be rotated with respect to the first fiber tape 10a relatively to any of a plurality of rotational positions. This allows to obtain a slightly more detailed shaping of the boundary regions of a semi-finished product to better approximate the desired final shape.

The variation of a fiber tape laying system 1 shown in **Figs. 1** and **2** further comprises an applicator assembly arranged to apply a stabilization agent to the second surface of the first fiber tape.

**Figs. 3** and **4** schematically disclose another variation of a fiber tape laying system 1 comprising a fiber laying head 200 arranged to lay three fiber tapes 10a, 10b, 10c in parallel if desired. In order to provide a concise description this variation will only be described with respect to first and the second fiber tape 10a, 10b. In an analogous manner the description given with respect to the second fiber tape 10b also apply to the third fiber tape 10c.

In addition to the first supply 210a for the first fiber tape 10a, the fiber laying head 200 of this variation comprises also a second supply 210b for the second fiber tape 10b as well as a second compaction means 220b adapted to compact the second fiber tape 10b onto the substrate 11. As in the variation of a fiber tape laying system 1 as shown in **Figs. 1** and **2** also the fiber laying head 200 of the variation shown in **Figs. 3** and **4** will essentially not be displaced with respect to the base 300. Thus total mass and spatial dimensions of the fiber laying head 200 are not limited by the minimum required maneuverability or maximum feasible dynamic loads. This allows to arrange the second supply 210b as well as a second feeding means 230b at a different location than the first supply 210a and the first feeding means 230a. As well, as the first and second supply 210a, 210b essentially remain stationary with respect to the base 300 the storage capacity of main storage (not shown) and buffer storage can be maximized, allowing continuous operation of the fiber tape laying systems 1 as interruptions in interruptions in supply of the fiber tape 10a, 10b, 10c can be minimized. The second fiber tape feeding means 230b is arranged to feed second fiber tape 10b from the second supply 210b to a second compaction means 220b, which in the variation shown is integrally formed with the first compaction means 220a. As well, the variation comprises a second heating means 240b that is adapted to heat the second fiber tape 10b before being compacted onto the substrate 110. The first and the second heating means 240a, 240b may be formed integrally or may also be essentially independent from each other, allowing to heat binding means 20 of an individual fiber tape only when really needed. As depicted in **Fig. 4** a second separator 250b is configured to separate a strip of the second fiber tape 10b from the second supply 210b before being compacted onto the substrate 110 by means of the second compaction means 200b. The second separator 250b is essentially formed like the first separator 250a which has a first blade 251a that is configured to cut the first fiber tape 10a with an essentially straight cutting edge 252a. The first separator 250a further comprises an angular actuator 253a that allows to rotate the first blade 251a, respectively the first cutting edge 252a relatively to any of a plurality of rotational positions (indicated by the double-headed arrow).

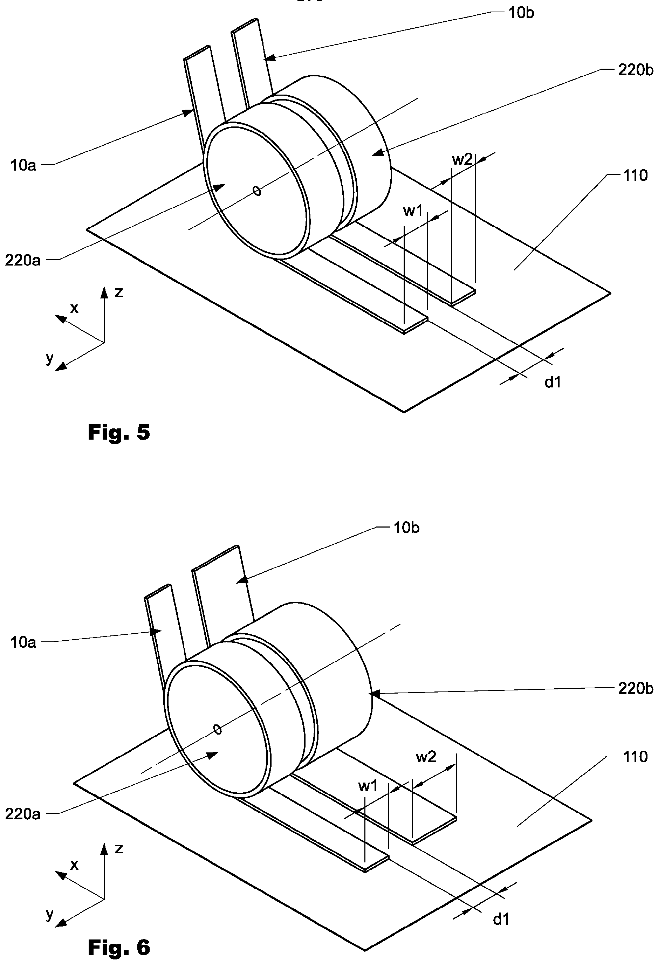

**Fig. 5** schematically shows part of a variation of a fiber tape laying system having a first fiber tape 10a with a first width w1 and a second fiber tape 10b having a second width, the first and the second width w1, w2 being equal. The first fiber tape 10a is compacted by a first compaction device 220a, whereas the second fiber tape 10b is compacted by a second compaction device 220b, that first and the second compaction devices 220a, 220b being formed essentially independent from one another. When being laid onto the substrate 110, the first fiber tape 10a is compacted (and consequently positioned) at a first distance d 1 apart from the second fiber tape 10b. Thus, for certain types of fiber a more event compaction/laying of the fiber tapes 10a, 10b onto the substrate 110 can be obtained as the individual compaction means 220a, 220b can be optimized for compaction of the individual fiber tapes 10a, 10b regardless of the geometry of the neighboring fiber tape (respectively compaction means). When using such an arrangement of a first and a second compactor means 220a, 220b the unfilled region between the first and a second fiber tape 10a, 10b could be filled in a subsequent laying step if needed. By this efficient and accurate fiber laying of large areas becomes possible.

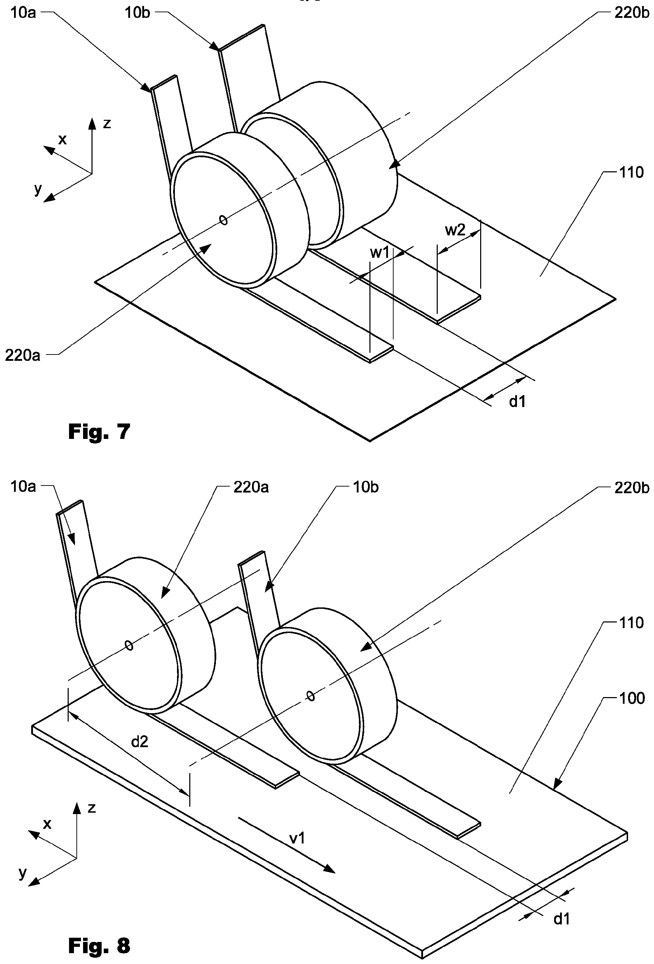

**Figs. 6** and **7** schematically show another variation of a part of a variation of a fiber tape laying system having a first fiber tape 10a with a first width w1 and a second fiber tape 10b having a second width, the first width w1 being larger than the second width w2. Like in the variation shown in **Fig. 5**, when being laid onto the substrate 110, the first fiber tape 10a is compacted (and consequently positioned) at a first distance d 1 apart from the second fiber tape 10b. In the variation shown in **Fig. 6**, the first distance d1 is essentially equal to the first width w1 whereas in the variation shown in **Fig. 7** the first distance d1 is essentially equal to the second width w2. With such variations again efficient and accurate fiber laying of large areas becomes possible as the second fiber tape 10b allows large area laying while the first fiber tape allows a more accurate approximation of the final shape of a semi-finished product to be produced.

As shown in **Fig. 8****,** when the table 100 is moved in a first direction v1 relatively to the fiber laying head (only compaction means 220a, 220b shown) during compaction, the first compaction means 220a may also arranged with respect to the first direction v1 at a second distance d2 apart from the second compaction means 220b.

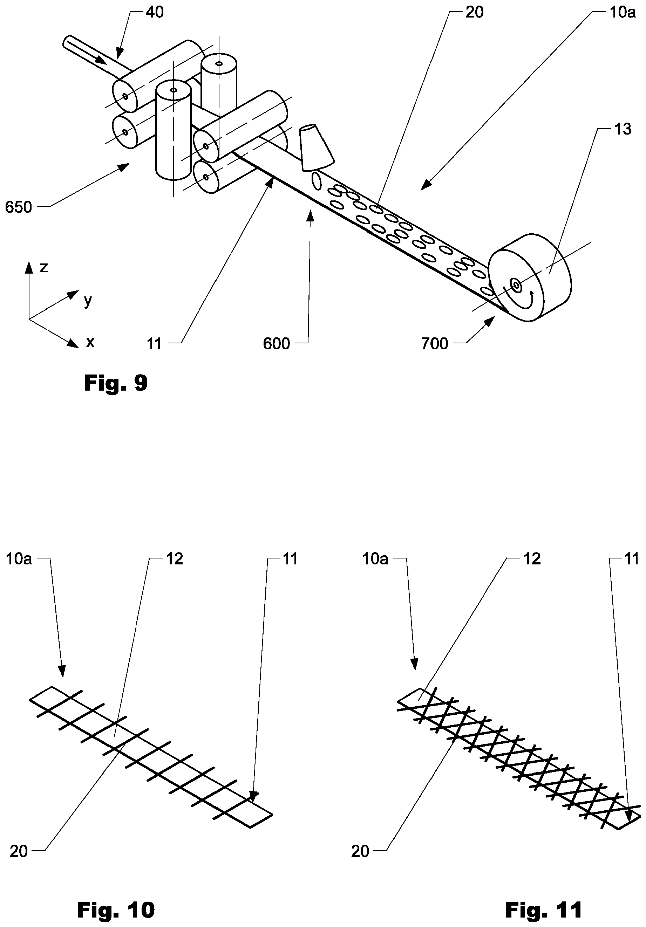

**Fig. 9** schematically shows a method for producing a variation of a fiber tape 10a according to the present invention that could be used for a fiber tape laying system according to the present invention. As shown, in a first step a roving 40 comprising a high number of singles filaments (not shown in detail) is deformed in a shaping assembly 650 that gradually deforms the roving 40 such that its cross-section is converted from a circular (or slightly elliptical) shape to an essentially flat shape. Within this context "flat" refers to a cross-section that has a thickness which is significantly smaller than its width. The thickness will also typically be essentially constant across the width. However, it is clear that the present invention is not limited to fiber tapes with essentially flat cross-sections and hence also fiber tape with e.g. elliptical or square cross-sections may be processed with a fiber tape laying system as described herein as well as fiber tape comprising such cross-sections may be produced by a process as described herein. After being deformed in the shaping assembly 650 the filaments are arranged in a layer of reinforcing fibers 11 having a first surface 12 and a second surface 13. The second surface 13 is arranged opposite to the first surface 12. Subsequently, the layer of fibers 11 is conveyed at a constant speed though a sputtering assembly 600 where a binding means 20 is applied to the first surface 12. In the variation shown a speckled pattern of thermoplastic binding means 200 is applied. However, the present invention is not limited to such a pattern and also e.g. also a quasi-endless thin body of thermoplastics may be applied in a regular or irregular pattern on the first surface 12. The resulting fiber tape then is stored on a reel 700.

**Figs. 10** and **11** schematically show two variations of fiber tapes 10a that may be used for a system for laying of fiber tape according to the present invention. In **Fig. 10** a fiber tape 10a is shown that comprises a layer of reinforcing fibers 11 which are arranged as a unidirectional fabric tape comprising thermoplastic weft yarn 20 arranged at regular intervals and protruding from the layer of reinforcing fibers 11 in transversal direction on both sides. In the variation 10a as shown in **Fig. 11** the binding means 20 comprises a net-like thermoplastic which also protrudes from the layer of reinforcing fibers 11 in transversal direction on both sides.

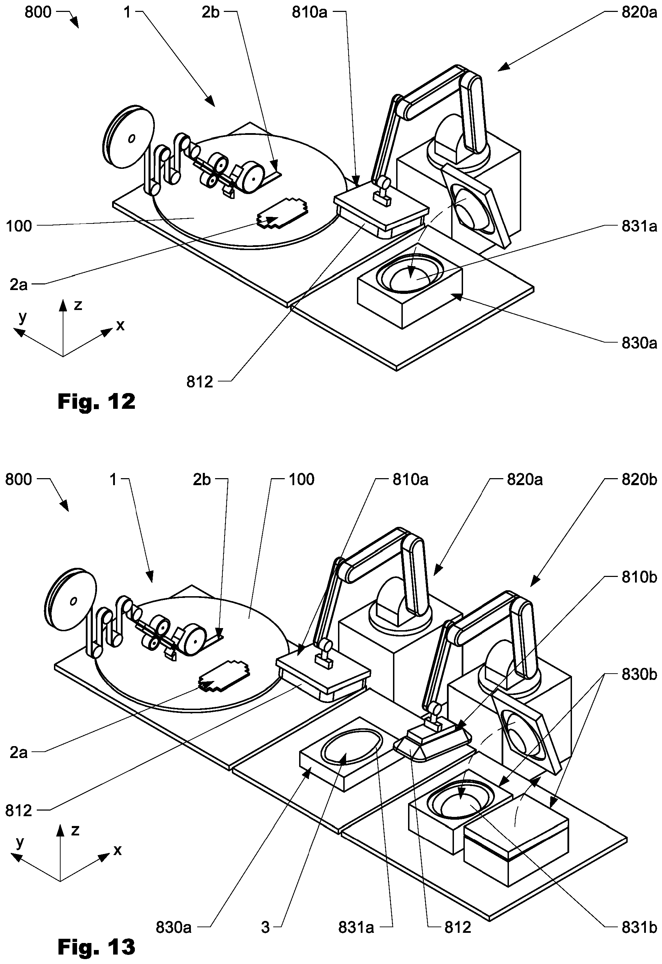

**Fig. 12** shows a variation of a production line 800 according to the present invention. The production line 800 comprises a fiber tape laying system 1 as described herein and which is arranged to lay a semi-finished product 2a, 2b onto a table 100. As schematically shown, the tape laying system may be configured to lay multiple semi-finished products 2a, 2a subsequently or in parallel onto the table 100. The production line 800 further comprises a first pick-up means 810a that is embodied as a foam gripper configured to pick-up the essentially two-dimensional semi-finished product 2a, 2b from the table 100 and temporarily hold it. The first pick-up means 310a is interconnected to a first conveying means 820a that is configured to convey the semi-finished product 2a, 2b held by the first pick-up means 810a to a first tool 830a. In the variation shown the conveying means 820a comprises a robot arm. However, the present invention is not limited to such types of conveyor means. The foam gripper has a vacuum pump fluidically interconnected with a foam member 812 comprising an open-cell foam. Thus the semi-finished product 2a, 2b can held by the foam gripper by obtaining a pressure gradient by the vacuum pump. At the same time the semi-finished product 2a, 2b can be pressed by means of the foam member 812 onto a first tool surface 831a of the first tool 830a which assists in draping of the semi-finished product 2a, 2b and obtain proper alignment of the semi-finished product 2a, 2b and the first tool surface 831a. In the variation of a production line 800 shown, the first tool 830a is a production tool of a RTM system. As indicated by the dashed arrow, the first tool 830a may be closed and subsequently the fibers of the semi-finished product 2a, 2b may be bonded by a resin filled into the first tool 830a.

**Fig. 13** shows a variation of a production line 800 similar like the variation shown in **Fig. 12****.** However, in contrast to the variation shown in **Fig. 12**, the variation shown in **Fig. 13** comprises a second pick-up means 810b that is configured to pick-up a pre-shaped semi-finished product 3 from the first tool 830a, the pre-shaped semi-finished product 3 being formed by draping of the original (essentially two-dimensional) semi-finished product 2a, 2a to at least partially align with the first tool surface 831a of the first tool 830a. In this variation, the first tool 830a is not a production tool of a RTM system but instead is used for draping of the originally laid two-dimensional semi-finished product 2a, 2b into a pre-shaped semi-finished product 3. The variation shown further comprises a second conveying means 820b configured to convey the pre-shaped semi-finished product 3 held by a second pick-up means 810b to a second tool 830b, which in this variation is a production tool of a RTM system. As shown, the variation shown comprises two second tools 830b, allowing to consolidate a first pre-shaped semi-finished product in a first tool while aligning a second pre-shaped semi-finished product in a second tool (both not shown in detail). Thus, overall production capacity of the production line 800 can be increased. Both, the first and the second pick-up means are foam grippers. As schematically shown, the second pick-up means 810b has a different geometry than the first pick-up means 81 0a, the second pick-up member 810b having a foam member that at least partially conforms to the shape of the pre-shaped semi-finished product 3 as formed in the first tool 830a. Thus, gradual deformation of the original essentially two-dimensional semi-finished products 2a, 2b can be improved.

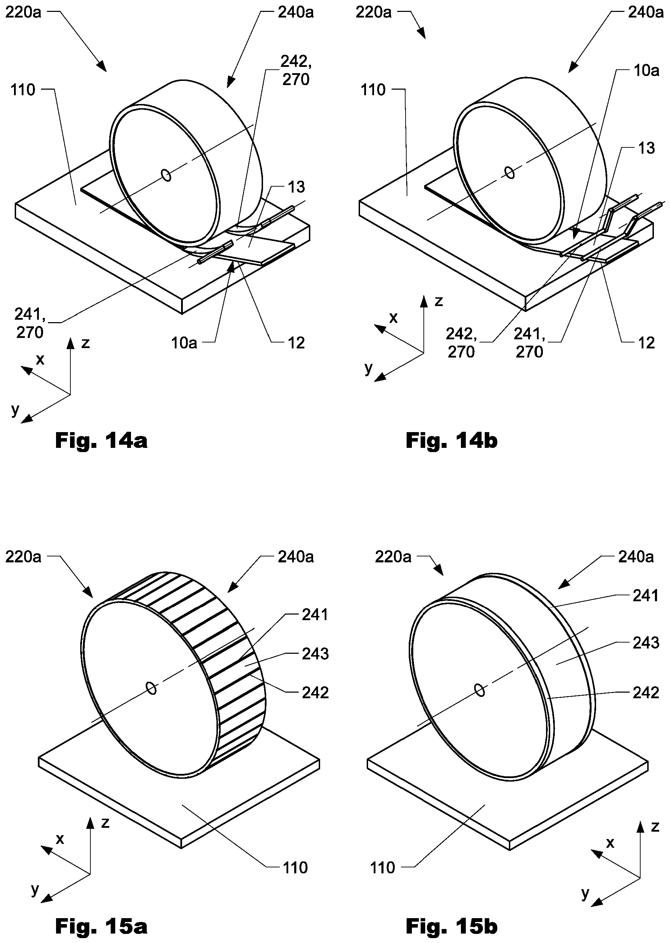

**Figs. 14a** and **14b** schematically show a first variation of a first heating means 240a that is arranged upstream of a first compaction means 220a comprising a compaction roll. The variation of heating means 240a comprises a first and a second electrical contact means 241, 242 that are embodied as sliding contacts, sliding on a second surface 13 of the first fiber tape 10a, a distance apart from each other and close to the boundary edges of the first fiber tape 10a to establish an electrical interconnection with the fiber first tape 10a. By applying a voltage between the first and the second electrical contact means 241, 242 a current is generated in the fibers of the first fiber tape 10a (which comprises at least some electrically conductive components) resulting in an increase of temperature of the first fiber tape 10a and hence of the binding means (not visible) arranged at the first fiber tape 10a. Thus, the adhesive agent is brought to an adhesive state and can interconnect with the substrate 110 when being compressed onto it by the first compaction means 220a. In the second variation of a heating means 240a as schematically shown in **Fig. 14b****,** the first and the second electrical contact means 241, 242 are essentially formed like bars that slide over the second surface 13 of the fiber tape 10a, a certain distance apart from each other in conveying direction of the fiber tape 10a. Instead of bars as schematically shown, also rolls may be used, leading to a more rolling than sliding contact. Additional electrical contact means (not shown) may be applied upstream of the fiber tape 10a in order to improve heating of the binding means in an analogous manner. The variations of first and the second electrical contact means 241, 242 shown in **Figs. 14a** and **14b** are also part of a tape guiding means 270 and help in positioning of the first fiber tape 10a with respect to the first compaction means 240a (respectively the substrate). Although the first and the second electrical contact means 241, 242 shown in Figs. 14a, 14b are arranged on the second surface 13 directed away from the substrate 110, at least one of them may also be arranged on the first surface 12 directed to the substrate 110. Having the first electrical contact means 241 arranged on the first surface 12 and the second electrical contact means 242 on the second surface allows obtaining a particularly even heating of the fiber tape 10a. It is clear that the present invention is not limited to electrical contacts established at these areas of the fiber tape. In particular electrical contact by the first and/or the second electrical contact means may also be established on both the first and the second surface at the same time (respectively in a semi-encompassing manner).

**Figs. 15a** and **15b** schematically show a third and a fourth variation of a heating means 240a that are arranged at the circumferential surface of a roll that is part of a compaction means 220a as described above. In the variation schematically shown in **Fig. 15a**, a multiplicity of electrical contact means 241, 242 are arranged distributed around the circumference of the compaction roll 220a, the individual electrical contact means 241, 242 protruding a little bit from the circumferential surface of the roll and extending in direction parallel to the rotational axis of the roll (parallel to the y-axis). As illustrated first and second electrical contact means 241, 242 are spaced apart from each other, having an electrically non-conducting surface 243 in-between. The electrically non-conductive surface 243 may comprise an active cooling means in order to prevent thermal damage and/or sticking binding means to the compaction means 220a. The variation shown in **Fig. 15a** further comprises a control system that allows to control the voltage applied between two neighboring electrical contact means 241, 242. Thus, a fiber tape (not shown) aligning and following the circumferential/curved surface of the roll 220a can e.g. be heated over a certain distance before being brought into contact with the substrate 110 and subsequently e.g. be cooled by the roll 220a if the roll comprises means for cooling allowing immediate solidification of the binding means after being brought into contact with the substrate.

The fourth variation of a heating means 240a according to the present invention as shown in **Fig. 15b** having first and the second electrical contact means 241, 242 arranged at the circumferential (curved) surface of the compaction roll 220a. The electrical contact means are 241, 242, separated by an electrically non-conductive surface area 243. The first and the second electrical contact means 241, 242 protrude from the circumferential surface and are spaced apart from each other essentially in direction parallel to the rotational axis (parallel to the y-axis) of the roll 220a, while extending in circumferential direction of the roll. For some applications a multiplicity of first and or the second electrical contact means 241, 242 may be distributed in circumferential direction of the roll 220a, allowing a controlled heating of parts only of a fiber tape (not shown) in contact with the heating means 240a in an analogous manner as explained above with respect to the variation shown in **Fig. 15a****.**

Rather, the words used in the specification are words of description rather than limitation, and it is understood that various changes may be made without departing from the scope of the appended claims.

### LIST OF DESIGNATIONS

- 1: Fiber tape laying system
- 2a: First semi-finished product
- 2b: Second semi-finished product
- 3: Pre-shaped semi-finished product
- 10a: First fiber tape
- 10b: Second fiber tape
- 11: Layer of reinforcing fibers
- 12: First surface
- 13: Second surface
- 20: Binding means
- 40: Roving
- 100: Table
- 110: Substrate
- 114: Backing fabric
- 115: Backing film
- 116: Adhesive surface
- 117: Adhesive coating
- 200: Fiber laying head
- 210a: First supply of fiber tape
- 210b: Second supply of fiber tape
- 211a: Buffer storage
- 220a: First compaction means
- 220b: Second compaction means
- 221a: First compaction roller
- 221b: Second compaction roller
- 230a: First fiber tape feeding means
- 230b: Second fiber tape feeding means
- 240a: First heating means
- 240b: Second heating means
- 241: First electrical contact means
- 242: Second electrical contact means
- 243: Electrically non-conductive surface
- 250a: First separator
- 250b: Second separator
- 251a: First blade
- 251b: Second blade
- 252a: First cutting edge
- 252b: Second cutting edge
- 253a: First angular actuator
- 253b: Second angular actuator
- 260: Applicator assembly
- 270: Tape guiding means
- 300: Base
- 400: Semi-finished product
- 600: Sputtering assembly
- 650: Shaping assembly
- 700: Reel
- 800: Production line
- 810a: First pick-up means
- 810b: Second pick-up means
- 812: Foam member
- 820a: First conveyor means
- 820b: Second conveyor means
- 830a: First tool
- 830b: Second tool
- 831a: First tool surface
- 831b: Second tool surface
- w1: First width
- w2: Second width
- d1: First distance
- d2: Second distance
- v1: First direction

## Claims

1. A production line (800) comprising
a. a fiber tape laying system (1) arranged to lay a semi-finished product (2a, 2b) onto a table (100), comprising
a table (100) having a substrate (110) configured to receive a first fiber tape (10a) to be laid, the first fiber tape (10a) having a first surface (12) arranged to be adjacent to the substrate (110) when the first fiber tape (10a) is laid onto to the substrate (110) and comprising a binding means (20) arranged at least partially on the first surface (12) and a second surface (13) opposite to the first surface (12), and the fiber tape laying system (1) further comprising a fiber laying head (200), having a first supply (210a) of the first fiber tape (10a) and a first compaction means (220a) adapted to compact the first fiber tape (10a) onto the substrate (110) and a first fiber tape feeding means (230a) arranged to feed first fiber tape (10a) from the first supply (210a) to the first compaction means (220a) and a first heating means (240a) adapted to heat directly or indirectly the binding means (20) before being compacted onto the substrate (110) and a first separator (250a) configured to separate a predefined strip of first fiber tape (10a) from the first supply (21 0a) before being compacted onto the substrate (110) and the fiber laying head (200) and the table (100) being configured to be displaced and/or rotated relatively to each other;
b. a first pick-up means (810a) configured to pick-up the semi-finished product (2a, 2b) from the table (100) and temporarily hold it;
c. a first conveying means (820a) configured to convey the semi-finished product (2a, 2b) held by the first pick-up means (810a) to a first tool (830a) and the first pick-up means (810a) configured to drape the semi-finished product (2a, 2b) to a first tool surface (831a) of the first tool (830a) forming a pre-shaped semi-finished product (3);
d. a second pick-up means (810b) configured to pick-up the semi-finished product (2a, 2b) from the first tool (830a); and
e. a second conveying means (820b) configured to convey the pre-shaped semi-finished product (3) held by the second first pick-up means (810b) to a second tool (830b) and the second pick-up means (810b) configured to drape the pre-shaped semi-finished product (3) to a second tool surface (831b) of the second tool (830b).

2. The production line (800) according to claim 1, wherein the table (100) is a motion table configured to be displaced and/or rotated with respect to the base (300) of the fiber tape laying system (1).

3. The production line (800) according to claim 2, wherein the fiber laying head (200) is essentially stationary with respect to the base (300) of the fiber tape laying system (1).

4. The production line (800) according to any one of the preceding claims, wherein the first separator (250a) comprises a first blade (251a) configured to cut the first fiber tape (10a) with an essentially straight cutting edge (252a).

5. The production line (800) according to claim 4, wherein the first separator (250a) comprises a first angular actuator (253a) to rotate the first cutting edge (252a) relatively to any of a plurality of rotational positions.

6. The production line (800) according to any one of the preceding claims, wherein the fiber laying head (200) further comprises a second supply (210b) of a second fiber tape (10b) and a second compaction means (220b) adapted to compact the second fiber tape (10b) onto the substrate (110) and a second fiber tape feeding means (230b) arranged to feed second fiber tape (10b) from the second supply (210b) to the second compaction means (220b) and a second heating means (240b) adapted to heat the binding means (20) of the second fiber tape (10b) directly or indirectly before being compacted onto the substrate (110) before being compacted onto the substrate (110) and a second separator (250b) configured to separate a strip of the second fiber tape (10b) from the second supply (210b) before being compacted onto the substrate (110), wherein the first fiber tape (10a) has a first width (w1) and the second fiber tape (10b) has a second width (w2), the first width (w1) being equal to the second width (w2) or the first width (w1) being larger than the second width (w2).

7. The production line (800) according to any claim 6, wherein when being laid onto the substrate (110) the first fiber tape (10a) is compacted at a first distance (d1) apart from the second fiber tape (10b).

8. The production line (800) according to any one of claims 6 or 7, wherein when the table (100) is moved in a first direction (v1) relatively to the fiber laying head (200) during compaction, the first compaction means (220a) is arranged with respect to the first direction (v1) at the same position as the second compaction means (220b)or at a second distance (d2) apart from the second compaction means (220b).

9. The production line (800) according to any one of the preceding claims, wherein an applicator assembly (260) is arranged to apply a stabilization agent (30) to the second surface (13) of the first fiber tape (10a).

10. The production line (800) according to claim 9, wherein the applicator assembly (260) is arranged such that the stabilization agent (30) is applied to the second surface (13) of the first fiber tape (10a) after the first fiber tape (10a) has been compacted onto the substrate (110).

11. The production line (800) according to any one of the preceding claims, wherein the first heating means (240a) is configured to heat the binding means (20) of the first fiber tape (10a) to be laid directly or indirectly before being compacted onto the substrate (110) and is configured to heat at least a portion the substrate (110) and/or the binding means (20) of a at least a portion of a first fiber tape (10a) already arranged on the substrate (110) and onto which the first fiber tape is to be laid.

12. The production line (800) according to claim 11, wherein between about 50% and 99%, in particular about 80% of the thermal energy delivered by the first heating means (10a) is delivered to the substrate (110) and/or to the first fiber tape (10a) already arranged on the substrate (110), and wherein the residual thermal energy is delivered to the first fiber tape (10a) to be laid on the substrate (110).

13. The production line (800) according to any one of the preceding claims, wherein the supply (210a, 210b) of fiber tape (10a, 10b) is provided by unwinding the fiber tape (10a, 10b) from an actively driven reel (700).

14. The production line (800) according to any one of claims 1 to 13, wherein the second tool (310b) is a production tool of a resin transfer molding system and/or the first tool (310a) is a production tool of a resin transfer molding system.

15. A method for producing a product made from fiber-reinforced plastic, comprising the method steps of
a. providing a production line (800) according to any one of claims 1 to 14;
b. laying at least one layer of a fiber tape (10a, 10b) onto the substrate (110) thereby forming a first semi-finished product (2a),
c. removing of the first semi-finished product (2a) from the table (100);
d. conveying of the first semi-finished product (2a) to a first tool (830a);
e. draping of the first semi-finished product (2a) to align with a first tool surface (831a) of the first tool (830a) to form a pre-shaped semi-finished product (3);
f. removing of the pre-shaped semi-finished product (3) from the first tool (830a);
g. conveying of the pre-shaped semi-finished product (3) to a second tool (830b);
h. draping of the pre-shaped semi-finished product (3) to align with the second tool surface (831b) of the second tool (830b).
i. bonding of the fibers of the pre-shaped semi-finished product (3) by a resin in the second tool (830b).

16. The method according to claim 15, wherein the method further comprises the method steps of
a. laying at least one layer of a fiber tape (10a, 10b) onto the substrate (110) thereby forming a second semi-finished product (2b);
b. removing of the second semi-finished product (2b) from the table (100);
c. conveying of the second semi-finished product (2b) to the first tool (830a);
d. draping of the second semi-finished product (2b) to align with first the tool surface (831a) of the first tool (830a) forming a pre-shaped semi-finished product (3) together with the first semi-finished product (2a).

17. The method according to any one of claims 15 or 16, wherein the fibers of the pre-shape semi-finished product (3) are bonded by a transfer molding process such as a resin transfer molding process or a vacuum assisted resin transfer molding process.

18. The method according to any one of claims 15 to 17, wherein draping is done using a suction pick-up head comprising a foam gripper.

19. The method according to any one of claims 15 to 18, wherein the first semi-product (2a) and/or the second semi-product (2b) and/or the pre-shaped semi-product (3) is/are conveyed by a robot.

20. The method according to any one of claims 15 to 19, wherein the method further comprises the method step of cutting of the laid semi-finished product (2a, 2b) to obtain a pre-defined shape prior to draping of it to align with the first tool surface (831a) of the first tool (830a)and/or to align with the second tool surface (831b) of the second tool (830b).

## Patentansprüche

1. Produktionslinie (800), umfassend
a. ein Faserband-Legesystem (1), das angeordnet ist, um ein halbfertiges Produkt (2a, 2b) auf einen Tisch (100) zu legen, umfassend
einen Tisch (100) mit einem Substrat (110), das so konfiguriert ist, um ein erstes zu legendes Faserband (10a) aufzunehmen, wobei das erste Faserband (10a) eine erste Oberfläche (12) aufweist, die so angeordnet ist, dass sie an das Substrat (110) angrenzt, wenn das erste Faserband (10a) auf das Substrat (110) gelegt wird, und ein Bindemittel (20) umfasst, das zumindest teilweise auf der ersten Oberfläche (12) angeordnet ist, und eine zweite Oberfläche (13), die der ersten Oberfläche (12) gegenüberliegt, und wobei das Faserband-Legesystem (1) ferner einen Faserlegekopf (200) umfasst, der eine erste Zufuhr (210a) des ersten Faserbandes (10a) und ein erstes Kompaktierungsmittel (220a), das ausgelegt ist, das erste Faserband (10a) auf dem Substrat (110) zu kompaktieren, und ein erstes Faserband-Zuführungsmittel (230a), das angeordnet ist, um das erste Faserband (10a) von der ersten Zufuhr (210a) zu dem ersten Kompaktierungsmittel (220a) zuzuführen, und ein erstes Heizmittel (240a), das ausgelegt ist, das Bindemittel (20) direkt oder indirekt zu erwärmen, bevor es auf dem Substrat (110) kompaktiert wird, und eine erste Trenneinrichtung (250a), die eingerichtet ist, um einen vordefinierten Streifen des ersten Faserbandes (10a) von der ersten Zufuhr (210a) zu trennen, bevor es auf dem Substrat (110) kompaktiert wird, aufweist, und wobei der Faserlegekopf (200) und der Tisch (100) so konfiguriert sind, um relativ zueinander verschoben und/oder gedreht zu werden;
b. ein erstes Aufnahmemittel (810a), das so konfiguriert ist, um das halbfertige Produkt (2a, 2b) von dem Tisch (100) aufzunehmen und es vorübergehend zu halten;
c. ein erstes Fördermittel (820a), das so konfiguriert ist, um das halbfertige Produkt (2a, 2b), das von dem ersten Aufnahmemittel (810a) gehalten wird, zu einem ersten Werkzeug (830a) zu befördern, und wobei das erste Aufnahmemittel (810a) so konfiguriert ist, um das halbfertige Produkt (2a, 2b) auf eine erste Werkzeugfläche (831a) des ersten Werkzeugs (830a) zu drapieren, wodurch ein vorgeformtes halbfertiges Produkt (3) gebildet wird;
d. ein zweites Aufnahmemittel (810b), das so konfiguriert ist, um das halbfertige Produkt (2a, 2b) von dem ersten Werkzeug (830a) aufzunehmen; und
e. ein zweites Fördermittel (820b), das so konfiguriert ist, um das vorgeformte halbfertige Produkt (3), das von dem zweiten ersten Aufnahmemittel (810b) gehalten ist, zu einem zweiten Werkzeug (830b) zu befördern, und wobei das zweite Aufnahmemittel (810b) so konfiguriert ist, um das vorgeformte halbfertige Produkt (3) auf einer zweiten Werkzeugfläche (831b) des zweiten Werkzeugs (830b) zu drapieren.

2. Produktionslinie (800) nach Anspruch 1, wobei der Tisch (100) ein beweglicher Tisch ist, der so konfiguriert ist, um in Bezug auf die Basis (300) des Faserband-Legesystems (1) verschoben und/oder gedreht zu werden.

3. Produktionslinie (800) nach Anspruch 2, wobei der Faserlegekopf (200) im Wesentlichen stationär in Bezug auf die Basis (300) des Faserband-Legesystems (1) ist.

4. Produktionslinie (800) nach einem der vorhergehenden Ansprüche, wobei die erste Trenneinrichtung (250a) eine erste Klinge (251a) umfasst, die so konfiguriert ist, um das erste Faserband (10a) mit einer im Wesentlichen geraden Schneidkante (252a) zu schneiden.

5. Produktionslinie (800) nach Anspruch 4, wobei die erste Trenneinrichtung (250a) ein erstes Winkelstellglied (253a) umfasst, um die erste Schneidkante (252a) relativ zu einer von mehreren Drehpositionen zu drehen.

6. Produktionslinie (800) nach einem der vorhergehenden Ansprüche, wobei der Faserlegekopf (200) ferner eine zweite Zufuhr (210b) eines zweiten Faserbandes (10b) und ein zweites Kompaktierungsmittel (220b), das ausgelegt ist, um das zweite Faserband (10b) auf dem Substrat (110) zu kompaktieren, und ein zweites Faserband-Zuführungsmittel (230b), das angeordnet ist, um das zweite Faserband (10b) von der zweiten Zufuhr (210b) zu dem zweiten Kompaktierungsmittel (220b) zuzuführen, und ein zweites Heizmittel (240b), das ausgelegt ist, das Bindemittel (20) des zweiten Faserbandes (10b) direkt oder indirekt zu erwärmen, bevor es auf dem Substrat (110) kompaktiert wird, bevor es auf dem Substrat (110) kompaktiert wird, und eine zweite Trenneinrichtung (250b), die so konfiguriert ist, um einen Streifen des zweiten Faserbandes (10b) von der zweiten Zufuhr (210b) zu trennen, bevor es auf dem Substrat (110) kompaktiert wird, umfasst, wobei das erste Faserband (10a) eine erste Breite (w1) und das zweite Faserband (10b) eine zweite Breite (w2) aufweist, wobei die erste Breite (w1) gleich der zweiten Breite (w2) ist oder die erste Breite (w1) größer als die zweite Breite (w2) ist.

7. Produktionslinie (800) nach Anspruch 6, wobei das erste Faserband (10a), wenn es auf das Substrat (110) gelegt wird, in einem ersten Abstand (d1) von dem zweiten Faserband (10b) kompaktiert wird.

8. Produktionslinie (800) nach einem der Ansprüche 6 oder 7, wobei, wenn der Tisch (100) während des Kompaktierens in einer ersten Richtung (v1) relativ zu dem Faserlegekopf (200) bewegt wird, das erste Kompaktierungsmittel (220a) in Bezug auf die erste Richtung (v1) an der gleichen Position wie das zweite Kompaktierungsmittel (220b) oder in einem zweiten Abstand (d2) von dem zweiten Kompaktierungsmittel (220b) angeordnet ist.

9. Produktionslinie (800) nach einem der vorhergehenden Ansprüche, wobei eine Applikatoranordnung (260) angeordnet ist, um ein Stabilisierungsmittel (30) auf die zweite Oberfläche (13) des ersten Faserbands (10a) aufzutragen.

10. Produktionslinie (800) nach Anspruch 9, wobei die Applikatoranordnung (260) derart angeordnet ist, dass das Stabilisierungsmittel (30) auf die zweite Oberfläche (13) des ersten Faserbandes (10a) aufgetragen wird, nachdem das erste Faserband (10a) auf dem Substrat (110) kompaktiert worden ist.

11. Produktionslinie (800) nach einem der vorhergehenden Ansprüche, wobei das erste Heizmittel (240a) so konfiguriert ist, um das Bindemittel (20) des zu legenden ersten Faserbandes (10a) direkt oder indirekt zu erwärmen, bevor es auf dem Substrat (110) kompaktiert wird, und so konfiguriert ist, um mindestens einen Teil des Substrats (110) und/oder des Bindemittels (20) mindestens eines Teils eines ersten Faserbandes (10a) zu erwärmen, das bereits auf dem Substrat (110) angeordnet ist und auf das das erste Faserband gelegt werden soll.

12. Produktionslinie (800) nach Anspruch 11, wobei zwischen etwa 50 % und 99 %, insbesondere etwa 80 % der Wärmeenergie, die von dem ersten Heizmittel (240a) abgegeben wird, an das Substrat (110) und/oder an das erste Faserband (10a) abgegeben wird, das bereits auf dem Substrat (110) angeordnet ist, und wobei die restliche Wärmeenergie an das erste Faserband (10a) abgegeben wird, das auf das Substrat (110) gelegt werden soll.

13. Produktionslinie (800) nach einem der vorhergehenden Ansprüche, wobei die Zufuhr (210a, 210b) von Faserband (10a, 10b) durch Abwickeln des Faserbands (10a, 10b) von einer aktiv angetriebenen Spule (700) erfolgt.

14. Produktionslinie (800) nach einem der Ansprüche 1 bis 13, wobei das zweite Werkzeug (310b) ein Produktionswerkzeug eines Harz-Transfer-Formsystems ist und/oder das erste Werkzeug (310a) ein Produktionswerkzeug eines Harz-Transfer-Formsystems ist.

15. Verfahren zum Herstellen eines Produkts aus faserverstärktem Kunststoff, folgende Verfahrensschritte umfassend
a. Bereitstellen einer Produktionslinie (800) nach einem der Ansprüche 1 bis 14;
b. Legen von mindestens einer Lage eines Faserbandes (10a, 10b) auf das Substrat (110), wodurch ein erstes halbfertiges Produkt (2a) gebildet wird,
c. Entfernen des ersten halbfertigen Produkts (2a) von dem Tisch (100);
d. Befördern des ersten halbfertigen Produkts (2a) zu einem ersten Werkzeug (830a);
e. Drapieren des ersten halbfertigen Produkts (2a), um es mit einer ersten Werkzeugfläche (831a) des ersten Werkzeugs (830a) auszurichten, um ein vorgeformtes halbfertiges Produkt (3) zu bilden;
f. Entfernen des vorgeformten halbfertigen Produkts (3) von dem ersten Werkzeug (830a);
g. Befördern des vorgeformten halbfertigen Produkts (3) zu einem zweiten Werkzeug (830b);
h. Drapieren des vorgeformten halbfertigen Produkts (3), um es mit der zweiten Werkzeugfläche (831b) des zweiten Werkzeugs (830b) auszurichten;
i. Binden der Fasern des vorgeformten halbfertigen Produkts (3) durch ein Harz in dem zweiten Werkzeug (830b).

16. Verfahren nach Anspruch 15, wobei das Verfahren ferner die Verfahrensschritte umfasst
a. Legen mindestens einer Lage eines Faserbandes (10a, 10b) auf das Substrat (110), wodurch ein zweites halbfertiges Produkt (2b) gebildet wird;
b. Entfernen des zweiten halbfertigen Produkts (2b) von dem Tisch (100);
c. Befördern des zweiten halbfertigen Produkts (2b) zu dem ersten Werkzeug (830a);
d. Drapieren des zweiten halbfertigen Produkts (2b), um es mit der ersten Werkzeugfläche (831a) des ersten Werkzeugs (830a) auszurichten, wodurch ein vorgeformtes halbfertiges Produkt (3) zusammen mit dem ersten halbfertigen Produkt (2a) gebildet wird.

17. Verfahren nach einem der Ansprüche 15 oder 16, wobei die Fasern des vorgeformten halbfertigen Produkts (3) durch einen Transfer-Formvorgang, wie etwa einen Harz-Transfer-Formvorgang oder einen vakuumunterstützten Harz-Transfer-Formvorgang, gebunden werden.

18. Verfahren nach einem der Ansprüche 15 bis 17, wobei das Drapieren unter Verwendung eines Saugaufnahmekopfes erfolgt, der einen Schaumstoffgreifer umfasst.

19. Verfahren nach einem der Ansprüche 15 bis 18, wobei das erste halbfertige Produkt (2a) und/oder das zweite halbfertige Produkt (2b) und/oder das vorgeformte halbfertige Produkt (3) von einem Roboter befördert wird/werden.

20. Verfahren nach einem der Ansprüche 15 bis 19, wobei das Verfahren ferner den Verfahrensschritt zum Schneiden des gelegten halbfertigen Produkts (2a, 2b) umfasst, um eine vordefinierte Form zu erhalten, bevor es so drapiert wird, dass es mit der ersten Werkzeugfläche (831a) des ersten Werkzeugs (830a) ausgerichtet wird und/oder dass es mit der zweiten Werkzeugfläche (831b) des zweiten Werkzeugs (830b) ausgerichtet wird.

## Revendications

1. Chaîne de production (800) comprenant
a. un système de pose de bandes de fibres (1) conçu pour poser un produit semifini (2a, 2b) sur une table (100), comprenant
une table (100) comportant un substrat (110) configuré pour recevoir une première bande de fibres (10a) à poser, la première bande de fibres (10a) comportant une première surface (12) disposée de manière à être adjacente au substrat (110) lorsque la première bande de fibres (10a) est posée sur le substrat (110) et comprenant un moyen de liaison (20) disposé au moins partiellement sur la première surface (12) et une deuxième surface (13) opposée à la première surface (12), et le système de pose de bandes de fibres (1) comprenant en outre une tête de pose de fibres (200) comportant une première alimentation (210a) de la première bande de fibres (10a) et un premier moyen de compactage (220a) adapté pour compacter la première bande de fibres (10a) sur le substrat (110) et un premier moyen d'alimentation en bandes de fibres (230a) conçu pour alimenter une première bande de fibres (10a) à partir de la première alimentation (210a) vers le premier moyen de compactage (220a) et un premier moyen de chauffage (240a) adapté pour chauffer directement ou indirectement le moyen de liaison (20) avant le compactage de celle-ci sur le substrat (110) et un premier séparateur (250a) configuré pour séparer un ruban prédéfini de première bande de fibres (10a) à partir de la première alimentation (210a) avant le compactage de celle-ci sur le substrat (110) et la tête de pose de fibres (200) et la table (100) étant configurées pour être déplacées et/ou tournées l'une par rapport à l'autre ;
b. un premier moyen de prélèvement (810a) configuré pour prélever le produit semifini (2a, 2b) à partir de la table (100) et le maintenir temporairement;
c. un premier moyen de transport (820a) configuré pour transporter le produit semifini (2a, 2b) maintenu par le premier moyen de prélèvement (810a) vers un premier outil (830a) et le premier moyen de prélèvement (810a) étant configuré pour draper le produit semifini (2a, 2b) sur une première surface d'outil (831a) du premier outil (830a) formant un produit semifini préformé (3) ;
d. un deuxième moyen de prélèvement (810b) configuré pour prélever le produit semifini (2a, 2b) à partir du premier outil (830a) ; et
e. un deuxième moyen de transport (820b) configuré pour transporter le produit semifini préformé (3) maintenu par le deuxième moyen de prélèvement (810b) vers un deuxième outil (830b) et le deuxième moyen de prélèvement (810b) étant configuré pour draper le produit semifini préformé (3) sur une deuxième surface d'outil (831b) du deuxième outil (830b).

2. Chaîne de production (800) selon la revendication 1, dans laquelle la table (100) est un table mobile configurée pour être déplacée et/ou tournée par rapport à la base (300) du système de pose de bandes de fibres (1) .

3. Chaîne de production (800) selon la revendication 2, dans laquelle la tête de pose de fibres (200) est essentiellement immobile par rapport à la base (300) du système de pose de bandes de fibres (1).

4. Chaîne de production (800) selon l'une quelconque des revendications précédentes, dans laquelle le premier séparateur (250a) comprend une première lame (251a) configurée pour couper la première bande de fibres (10a) avec un tranchant essentiellement droit (252a).

5. Chaîne de production (800) selon la revendication 4, dans laquelle le premier séparateur (250a) comprend un premier actionneur angulaire (253a) destiné à faire tourner le premier tranchant (252a) par rapport à l'une quelconque parmi une pluralité de positions de rotation.

6. Chaîne de production (800) selon l'une quelconque des revendications précédentes, dans laquelle la tête de pose de fibres (200) comprend en outre une deuxième alimentation (210b) d'une deuxième bande de fibres (10b) et un deuxième moyen de compactage (220b) adapté pour compacter la deuxième bande de fibres (10b) sur le substrat (110) et un deuxième moyen d'alimentation en bandes de fibres (230b) conçu pour alimenter une deuxième bande de fibres (10b) à partir de la deuxième alimentation (210b) vers le deuxième moyen de compactage (220b) et un deuxième moyen de chauffage (240b) adapté pour chauffer le moyen de liaison (20) de la deuxième bande de fibres (10b) directement ou indirectement avant le compactage de celle-ci sur le substrat (110) et un deuxième séparateur (250b) configuré pour séparer un ruban de la deuxième bande de fibres (10b) à partir de la deuxième alimentation (210b) avant le compactage de celle-ci sur le substrat (110), dans laquelle la première bande de fibres (10a) présente une première largeur (w1) et la deuxième bande de fibres (10b) présente une deuxième largeur (w2), la première largeur (w1) étant égale à la deuxième largeur (w2) ou la première largeur (w1) étant supérieure à la deuxième largeur (w2).

7. Chaîne de production (800) selon la revendication 6, dans laquelle, lors de la pose de celle-ci sur le substrat (110), la première bande de fibres (10a) est compactée à une première distance (d1) de la deuxième bande de fibres (10b).

8. Chaîne de production (800) selon l'une quelconque des revendications 6 ou 7, dans laquelle, lorsque la table (100) est déplacée dans une première direction (v1) par rapport à la tête de pose de fibres (200) pendant le compactage, le premier moyen de compactage (220a) est disposé à la même position que le deuxième moyen de compactage (220b) par rapport à la première direction (v1) ou à une deuxième distance (d2) par rapport au deuxième moyen de compactage (220b).

9. Chaîne de production (800) selon l'une quelconque des revendications précédentes, dans laquelle un ensemble d'applicateur (260) est conçu pour appliquer un agent de stabilisation (30) sur la deuxième surface (13) de la première bande de fibres (10a).

10. Chaîne de production (800) selon la revendication 9, dans laquelle l'ensemble d'applicateur (260) est conçu de telle façon que l'agent de stabilisation (30) est appliqué sur la deuxième surface (13) de la première bande de fibres (10a) après le compactage de la première bande de fibres (10a) sur le substrat (110).

11. Chaîne de production (800) selon l'une quelconque des revendications précédentes, dans laquelle le premier moyen de chauffage (240a) est configuré pour chauffer le moyen de liaison (20) de la première bande de fibres (10a) à poser directement ou indirectement avant le compactage de celle-ci sur le substrat (110) et configuré pour chauffer au moins une partie du substrat (110) et/ou du moyen de liaison (20) d'au moins une partie d'une première bande de fibres (10a) déjà disposée sur le substrat (110) et sur laquelle la première bande de fibres doit être posée.

12. Chaîne de production (800) selon la revendication 11, dans laquelle entre environ 50 % et 99 %, en particulier environ 80 % de l'énergie thermique délivrée par le premier moyen de chauffage (240a) est délivrée au substrat (110) et/ou à la première bande de fibres (10a) déjà disposée sur le substrat (110), et dans laquelle l'énergie thermique résiduelle est délivrée à la première bande de fibres (10a) à poser sur le substrat (110) .

13. Chaîne de production (800) selon l'une quelconque des revendications précédentes, dans laquelle l'alimentation (210a, 210b) de bande de fibres (10a, 10b) est fournie en déroulant la bande de fibres (10a, 10b) à partir d'une bobine (700) entraînée activement.

14. Chaîne de production (800) selon l'une quelconque des revendications 1 à 13, dans laquelle le deuxième outil (310b) est un outil de production d'un système de moulage par transfert de résine et/ou le premier outil (310a) est un outil de production d'un système de moulage par transfert de résine.

15. Procédé de production d'un produit fabriqué à partir de plastique renforcé par des fibres, comprenant les étapes de procédé suivantes :
a. mise à disposition d'une chaîne de production (800) selon l'une quelconque des revendications 1 à 14 ;
b. pose d'au moins une couche de bande de fibres (10a, 10b) sur le substrat (110), formant ainsi un premier produit semifini (2a),
c. retrait du premier produit semifini (2a) par rapport à la table (100) ;
d. transport du premier produit semifini (2a) vers une premier outil (830a) ;
e. drapage du premier produit semifini (2a) pour l'aligner avec une première surface d'outil (831a) du premier outil (830a) de manière à former un produit semifini préformé (3) ;
f. retrait du produit semifini préformé (3) par rapport au premier outil (830a) ;
g. transport du produit semifini préformé (3) vers un deuxième outil (830b) ;
h. drapage du produit semifini préformé (3) pour l'aligner avec la deuxième surface d'outil (831b) du deuxième outil (830b) ;
i. liaison des fibres du produit semifini préformé (3) à l'aide d'une résine dans le deuxième outil (830b).

16. Procédé selon la revendication 15, le procédé comprenant en outre les étapes de procédé suivantes
a. pose d'au moins une couche d'une bande de fibres (10a, 10b) sur le substrat (110), formant ainsi un deuxième produit semifini (2b) ;
b. retrait du deuxième produit semifini (2b) par rapport à la table (100) ;
c. transport du deuxième produit semifini (2b) vers une premier outil (830a) ;
d. drapage du deuxième produit semifini (2b) pour l'aligner avec une première surface d'outil (831a) du premier outil (830a) de manière à former un produit semifini préformé (3) conjointement avec le premier produit semifini (2a).

17. Procédé selon l'une quelconque des revendications 15 ou 16, dans lequel les fibres du produit semifini préformé (3) sont liées à l'aide d'un processus de moulage par transfert, tel qu'un processus de moulage par transfert de résine ou qu'un processus de moulage par transfert de résiné assisté par dépression.

18. Procédé selon l'une quelconque des revendications 15 à 17, dans lequel le drapage est réalisé à l'aide d'une tête de prélèvement par aspiration comprenant un préhenseur à mousse.

19. Procédé selon l'une quelconque des revendications 15 à 18, dans lequel le premier produit semifini (2a) et/ou le deuxième produit semifini (2b) et/ou le produit semifini préformé (3) est/sont transporté(s) par un robot.

20. Procédé selon l'une quelconque des revendications 15 à 19, le procédé comprenant en outre l'étape de procédé de découpage du produit semifini (2a, 2b) posé pour obtenir une forme prédéfinie avant le drapage de celuici de manière à l'aligner avec la première surface d'outil (831a) du premier outil (830a) et/ou à l'aligner avec la deuxième surface d'outil (831b) du deuxième outil (830b).
